# EUROPEAN PATENT APPLICATION

(11) **EP 4 557 678 A1**
(43) Date of publication of application: **21.05.2025**
(21) Application number: 22950762.9
(22) Date of filing: 15.07.2022
(51) Int. Cl.: H04L 27/00

(54) **DEVICE CAPABILITY EXCHANGE METHOD AND APPARATUS, RANGING SESSION ESTABLISHMENT METHOD AND APPARATUS, AND DEVICE**

(71) Applicant: GUANGDONG OPPO MOBILE TELECOMMUNICATIONS CORP., LTD., Dongguan, Guangdong 523860 (CN)
(72) Inventor: HUANG, Lei, Singapore 049483 (SG); HOU, Ronghui, Dongguan, Guangdong 523860 (CN); LUO, Chaoming, Dongguan, Guangdong 523860 (CN); SHI, Kaidi, Dongguan, Guangdong 523860 (CN); HONG, Feng, Dongguan, Guangdong 523860 (CN)
(74) Representative: Novagraaf Technologies
(86) International application number: PCT/CN2022/106134
(87) International publication number: WO 2024/011644

(57) **Abstract**

The present application belongs to the field of wireless local area networks. Disclosed are a device capability exchange method and apparatus, a ranging session establishment method and apparatus, and a device. The ranging session establishment method is executed by a first NAN device or a second NAN device. The method comprises: when a first NAN device and a second NAN device support an FTM ranging mode and/or a Non-TB ranging mode of EDCA, modifying and/or adding capability signaling used for device capability exchange; and modifying and/or adding setup signaling used for ranging session establishment, such that ranging between the first NAN device and the second NAN device can be performed by enabling the FTM ranging mode or the Non-TB ranging mode of the EDCA.

## Description

### TECHNICAL FIELD

Embodiments of the present disclosure relate to the field of wireless local area networks, and in particular, relate to a method and apparatus for exchanging a device capability, a method and apparatus for setting up a ranging session, and a device thereof.

### BACKGROUND

Ranging in neighbor awareness networking (NAN) refers to a process that one NAN device acquires a distance to another NAN device in a same NAN cluster.

The related mechanism additionally supports of the ranging function by the fine timing measurement (FTM) Protocol specified in the Institute of Electrical and Electronics Engineers (IEEE) 802.11 mc in the NAN, and an accuracy of an FTM ranging mode is 2 meters.

With increasing demands on personalized services, higher accuracy requirements are imposed on ranging of the NAN device in some scenarios, for example, controlling drones or indoor geolocation markers.

### SUMMARY

Embodiments of the present disclosure provide a method and apparatus for exchanging a device capability, a method and apparatus for setting up a ranging session, and a device thereof. The technical solutions are as follows.

According to some embodiments of the present disclosure, a method for exchanging a device capability of a NAN device is provided. The method is applicable to a first NAN device. The method includes: transmitting capability signaling for exchanging the device capability, wherein the capability signaling indicates whether the first NAN device supports a related capability of a target ranging mode, wherein the target ranging mode includes at least one of an enhanced distributed channel access (EDCA)-based enhanced FTM ranging mode or a non-trigger-based (non-TB) ranging mode.

According to some embodiments of the present disclosure, a method for exchanging a device capability of a NAN device is provided. The method is applicable to a second NAN device. The method includes: receiving capability signaling for exchanging the device capability, wherein the capability signaling indicates whether a first NAN device supports a related capability of a target ranging mode, wherein the first NAN device transmits the capability signaling, and the target ranging mode includes at least one of an EDCA-based enhanced FTM ranging mode or a non-TB ranging mode.

According to some embodiments of the present disclosure, a method for setting up a ranging session for a NAN device is provided. The method is applicable to a first NAN device. The method includes: transmitting setup signaling for setting up the ranging session, wherein the setup signaling indicates information related to a target ranging mode of the first NAN device, wherein the target ranging mode includes at least one of an EDCA-based enhanced FTM ranging mode or a non-TB ranging mode.

According to some embodiments of the present disclosure, a method for setting up a ranging session for a NAN device is provided. The method is applicable to a second NAN device. The method includes: receiving setup signaling for setting up the ranging session, wherein the setup signaling indicates information related to a target ranging mode of a first NAN device, wherein the first NAN device transmits the setup signaling, and the target ranging mode includes at least one of an EDCA-based enhanced FTM ranging mode or a non-TB ranging mode.

According to some embodiments of the present disclosure, an apparatus for exchanging a device capability of a NAN device is provided. The apparatus includes: a transmitting module, configured to transmit capability signaling for exchanging the device capability, wherein the capability signaling indicates whether a first NAN device supports a related capability of a target ranging mode, wherein the target ranging mode includes at least one of an EDCA-based enhanced FTM ranging mode or a non-TB ranging mode.

According to some embodiments of the present disclosure, an apparatus for exchanging a device capability of a NAN device is provided. The apparatus includes: a receiving module, configured to receive capability signaling for exchanging the device capability, wherein the capability signaling indicates whether a first NAN device supports a related capability of a target ranging mode, wherein the first NAN device transmits the capability signaling, and the target ranging mode includes at least one of an EDCA-based enhanced FTM ranging mode or a non-TB ranging mode.

According to some embodiments of the present disclosure, an apparatus for setting up a ranging session for a NAN device is provided. The apparatus includes: a transmitting module, configured to transmit setup signaling for setting up the ranging session, wherein the setup signaling indicates information related to a target ranging mode of a first NAN device, wherein the target ranging mode includes at least one of an EDCA-based enhanced FTM ranging mode or a non-TB ranging mode.

According to some embodiments of the present disclosure, an apparatus for setting up a ranging session for a NAN device is provided. The apparatus includes: a receiving module, configured to receive setup signaling for setting up the ranging session, wherein the setup signaling indicates information related to a target ranging mode of a first NAN device, wherein the first NAN device transmits the setup signaling, and the target ranging mode includes at least one of an EDCA-based enhanced FTM ranging mode or a non-TB ranging mode.

According to some embodiments of the present disclosure, a NAN device is provided. The WLAN device includes: a processor and a memory storing one or more programs, wherein the processor, when loading and running the one or more programs, causes the NAN device to perform the method for exchanging the device capability of the NAN device and/or the method for setting up the ranging session for the NAN device as described above.

According to some embodiments of the present disclosure, a computer-readable storage medium is provided. The storage medium stores one or more computer programs, wherein the one or more computer programs, when loaded and run by a NAN device, cause the NAN device to perform the method for exchanging the device capability of the NAN device and/or the method for setting up the ranging session for the NAN device as described above.

According to some embodiments of the present disclosure, a chip is provided. The chip includes programmable logic circuity or one or more program instructions. The chip, when running, causes a NAN device equipped with the chip to perform the method for exchanging the device capability of the NAN device and/or the method for setting up the ranging session for the NAN device as described above.

According to some embodiments of the present disclosure, a computer program product or a computer program is provided. The computer program product or the computer program includes one or more computer instructions stored in a computer-readable storage medium, wherein the one or more computer instructions, when read and executed by a NAN device from the computer-readable storage medium, cause the NAN device to perform the method for exchanging the device capability of the NAN device and/or the method for setting up the ranging session for the NAN device as described above.

The technical solutions according to the embodiments of the present disclosure achieve the following beneficial effects.

Whether the first NAN device supports the related capability of the target ranging mode is indicated by the capability signaling for exchanging the device capability, and the device capability is exchanged using the ranging mode different from the traditional FTM ranging mode, such that the target ranging mode supported by the first NAN device is expanded, different requirements on ranging of the NAN device in different scenarios are met, and the ranging accuracy is improved using the target ranging mode.

The information related to the target ranging mode of the first NAN device is indicated by the setup signaling for setting up the ranging session, the ranging mode different from the traditional FTM ranging mode is used for ranging, and a ranging parameter of the target ranging mode is negotiated, such that the target ranging mode supported by the first NAN device is expanded, different requirements on ranging of the NAN device in different scenarios are met, and the ranging accuracy is improved using the target ranging mode.

### BRIEF DESCRIPTION OF DRAWINGS

For clearer descriptions of the technical solutions according to the embodiments of the present disclosure, the following briefly introduces the accompanying drawings required for describing the embodiments. Apparently, the accompanying drawings in the following description show merely some embodiments of the present disclosure, and persons of ordinary skill in the art may still derive other drawings from these accompanying drawings without creative efforts.
FIG. 1 is a schematic diagram of a NAN system according to some embodiments of the present disclosure;
FIG. 2 is a schematic diagram of a ranging session initiated by a service discovery process according to some embodiments of the present disclosure;
FIG. 3 is a schematic diagram of a ranging session initiated by a NAN service according to some embodiments of the present disclosure;
FIG. 4 is a schematic diagram of a single burst FTM ranging mode according to some embodiments of the present disclosure;
FIG. 5 is a schematic diagram of a non-TB ranging mode having an immediate feedback report according to some embodiments of the present disclosure;
FIG. 6 is a schematic diagram of a non-TB ranging mode having a delayed feedback report according to some embodiments of the present disclosure;
FIG. 7 is a schematic diagram of a non-TB ranging mode having two-way feedback according to some embodiments of the present disclosure;
FIG. 8 is a flowchart of a method for exchanging a device capability of a NAN device according to some embodiments of the present disclosure;
FIG. 9 is a schematic diagram of capability signaling according to some embodiments of the present disclosure;
FIG. 10 is a schematic diagram of capability signaling according to some embodiments of the present disclosure;
FIG. 11 is a schematic diagram of capability signaling according to some embodiments of the present disclosure;
FIG. 12 is a schematic diagram of capability signaling according to some embodiments of the present disclosure;
FIG. 13 is a schematic diagram of capability signaling according to some embodiments of the present disclosure;
FIG. 14 is a flowchart of a method for exchanging a device capability of a NAN device according to some embodiments of the present disclosure;
FIG. 15 is a flowchart of a method for setting up a ranging session for a NAN device according to some embodiments of the present disclosure;
FIG. 16 is a schematic diagram of setup signaling according to some embodiments of the present disclosure;
FIG. 17 is a schematic diagram of setup signaling according to some embodiments of the present disclosure;
FIG. 18 is a schematic diagram of setup signaling according to some embodiments of the present disclosure;
FIG. 19 is a schematic diagram of setup signaling according to some embodiments of the present disclosure;
FIG. 20 is a flowchart of a method for setting up a ranging session for a NAN device according to some embodiments of the present disclosure;
FIG. 21 is a flowchart of a method for setting up a ranging session for a NAN device according to some embodiments of the present disclosure;
FIG. 22 is a flowchart of a method for starting a ranging mode of a NAN device according to some embodiments of the present disclosure;
FIG. 23 is a flowchart of a method for starting a ranging mode of a NAN device according to some embodiments of the present disclosure;
FIG. 24 is a flowchart of a method for starting a ranging mode of a NAN device according to some embodiments of the present disclosure;
FIG. 25 is a flowchart of a method for starting a ranging mode of a NAN device according to some embodiments of the present disclosure;
FIG. 26 is a structural block diagram of a NAN ranging engine according to some embodiments of the present disclosure;
FIG. 27 is a block diagram of an apparatus for exchanging a device capability of a NAN device according to some embodiments of the present disclosure;
FIG. 28 is a block diagram of an apparatus for exchanging a device capability of a NAN device according to some embodiments of the present disclosure;
FIG. 29 is a block diagram of an apparatus for setting up a ranging session for a NAN device according to some embodiments of the present disclosure;
FIG. 30 is a block diagram of an apparatus for setting up a ranging session for a NAN device according to some embodiments of the present disclosure; and
FIG. 31 is a schematic structural diagram of a computer device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenarios in the embodiments of the present disclosure are intended to describe the technical solutions according to the embodiments of the present disclosure more clearly, but do not constitute a limitation on the technical solutions according to the embodiments of the present disclosure. Those of ordinary skill in the art learn that, with the evolution of the network architecture and the emergence of new service scenarios, the technical solutions according to the embodiments of the present disclosure are also applicable to similar technical problems.

The NAN is described first.

In the standards developed by the wireless fidelity (Wi-Fi) Alliance, a sixth channel is a discovery channel in a NAN mechanism. In the sixth channel, a duration of each discovery window (DW) is fixed for each cluster, and an interval of any adjacent two DWs in the cluster is fixed.

Based on the standards developed by the Wi-Fi Alliance, NAN devices in a cluster transmit a sync beacon message within the DW to synchronize the NAN devices in the cluster, transmit a service discovery frames (SDF) message to perform service discovery, and transmit a discovery beacon message to declare the cluster within a duration beyond the DW.

Each NAN device in the cluster is capable of performing the service discovery within the DW to discover another NAN device that is capable of performing data transmission with the NAN device. Upon the service discovery, at least two NAN devices that need to transmit data between each other may use a time-frequency resource and a network connection mode agreed upon in the DW, and construct a network having a central node based on the agreed-upon network connection mode in the agreed-upon time-frequency resource.

The network constructed based on the agreement is a basic network of the Wi-Fi technology, which includes an infrastructure basic service set (infrastructure BSS) network or a peer to peer (P2P) network.

In the case that the at least two NAN devices agree to construct the infrastructure BSS network, and a NAN device in the at least two NAN devices is an access point (AP), the AP is a central node, and other NAN devices are connected to the AP. In the case that the at least two NAN devices agree to construct the infrastructure BSS network, and none of the at least two NAN devices is an AP, the user designates a NAN device as a central node, and other NAN devices are connected to the NAN device. In the case that the at least two NAN devices agree to construct the P2P network, the at least two NAN devices perform group owner (GO) negotiation to determine a NAN device to act as the GO, the GO is determined as a central node, and other NAN devices are all connected to the GO.

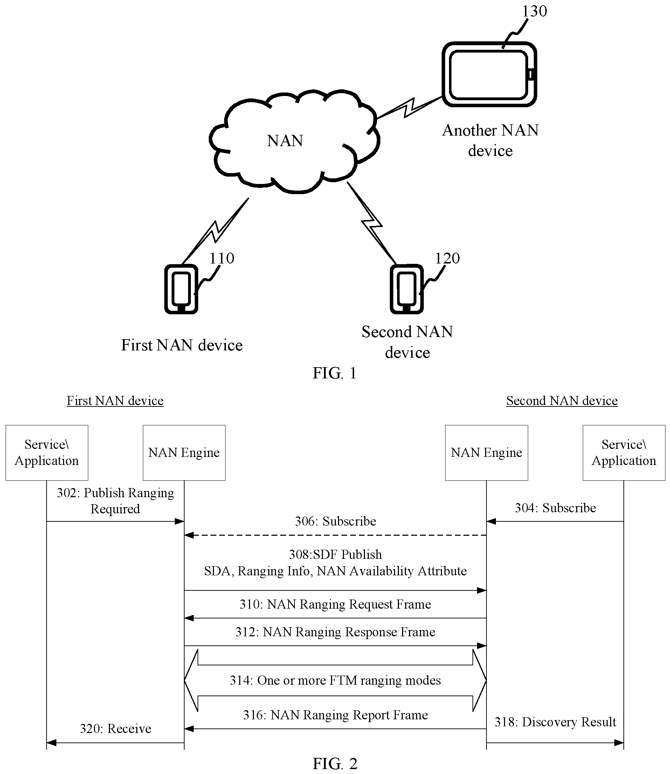

FIG. 1 is a schematic diagram of a NAN system according to some embodiments of the present disclosure. In the embodiments of the present disclosure, the NAN system includes at least two NAN devices. The two NAN devices include a first NAN device 110 and a second NAN device 120. The second NAN device 120 is a NAN device in the NAN network of the first NAN device 110. FIG. 1 only shows two NAN terminals. However, in some embodiments, a plurality of other terminals 130 may access the NAN network.

The NAN device may include an electronic device. The electronic device may include various devices with a wireless communication function, such as handheld devices, in-vehicle devices, wearable devices, computing devices or other processing devices connected to a wireless modem, various forms of user equipments (UEs), mobile stations (MSs), terminal devices, or the like.

### The ranging modes in some practices are described first.

### NAN ranging

In the NAN ranging, a NAN device acquires distance from other NAN devices in the same NAN cluster. The procedure of the NAN ranging includes the following four processes: the NAN ranging capability exchange; the NAN ranging session initiation, update, and termination; the NAN ranging report; and FTM protocol and procedure.

The ranging function is implicitly invoked by the service discovery process or explicitly invoked by the application and/or service. The two modes for invoking the NAN ranging module are described as follows.

FIG. 2 is a schematic diagram of a ranging session initiated by a service discovery process according to some embodiments of the present disclosure.

The schematic diagram of the ranging session initiated by the service discovery process includes a first NAN device and a second NAN device. The first NAN device includes a service/application, and a NAN engine. Similarly, the second NAN device includes a service/application, and a NAN engine.

In S302, the service/application of the first NAN device publishes a Ranging Required message to the NAN engine of the first NAN device.

In S304, the service/application of the second NAN device transmits a Subscribe message to the NAN engine of the second NAN device.

In S306, the NAN engine of the second NAN device transmits a Subscribe message to the NAN engine of the first NAN device.

In S308, the NAN engine of the first NAN device transmits an SDF to the NAN engine of the second NAN device.

Illustratively, the Service Discovery Frame (SDF) is of a Publish type. In some embodiments of the present disclosure, the SDF is a Neighbor Awareness Networking Service Discovery Frame (NAN SDF).

Illustratively, the SDF includes Service Descriptor Attribute (SDA), Ranging Information (Ranging Info), and NAN Availability Attribute.

In S310, the NAN engine of the second NAN device transmits a NAN ranging request frame to the NAN engine of the first NAN device.

In response to receiving a NAN SDF, the NAN engine of the second NAN device sets the Ranging Required message as True in Service Descriptor Extension Attribute of the NAN SDF, and constructs and transmits the NAN ranging request frame to a peer NAN device transmitting the unsolicited publish NAN SDF (the Publish type) to initiate the ranging session setup process for the expected service.

Illustratively, the NAN ranging request frame includes Ranging Info, Ranging Setup Attribute (RSUA), and NAN Availability Attribute.

In S312, the NAN engine of the first NAN device transmits a NAN ranging response frame to the NAN engine of the second NAN device.

Illustratively, the NAN ranging response frame includes the Ranging Info, the RSUA, and the NAN Availability Attribute.

In S314, one or more FTM ranging modes are performed between the NAN engine of the first NAN device and the NAN engine of the second NAN device.

In S316, the NAN engine of the second NAN device transmits a NAN ranging report frame to the NAN engine of the first NAN device.

Illustratively, the NAN ranging report frame includes an FTM ranging report.

In S318, the NAN engine of the second NAN device transmits a discovery result to the service/application of the second NAN device.

In S320, the NAN engine of the first NAN device transmits a Receive message to the service/application of the first NAN device.

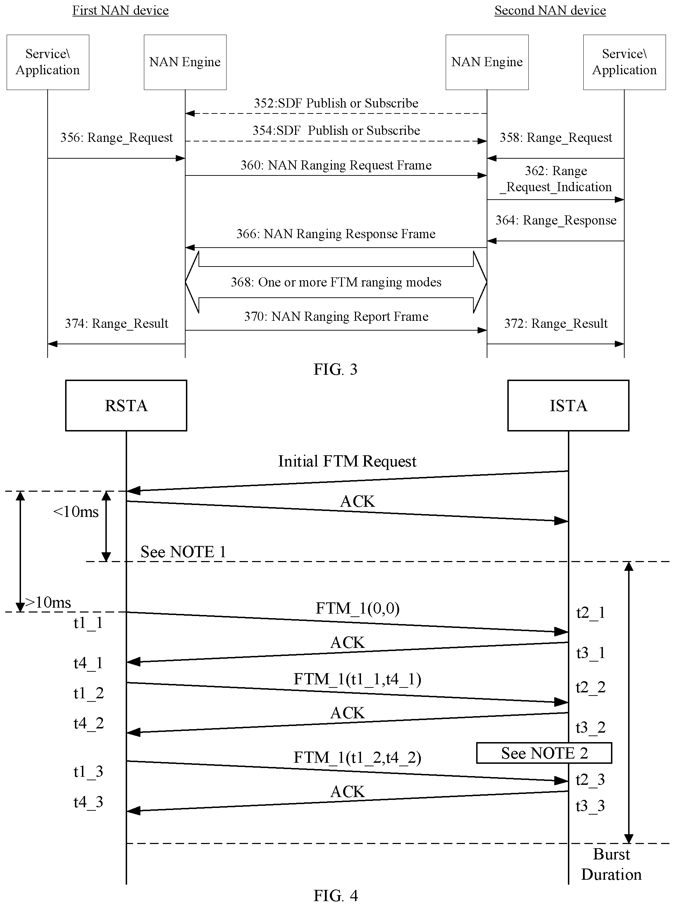

FIG. 3 is a schematic diagram of a ranging session initiated by a NAN service according to some embodiments of the present disclosure.

The schematic diagram of the ranging session initiated by the NAN service includes a first NAN device and a second NAN device. The first NAN device includes a service/application and a NAN engine. Similarly, the second NAN device includes a service/application and a NAN engine.

In S352, the NAN engine of the second NAN device transmits an SDF to the NAN engine of the first NAN device.

Illustratively, the SDF is of a Publish or a Subscribe type. The SDF includes Ranging Info and NAN Availability Attribute.

In S354, the NAN engine of the first NAN device transmits an SDF to the NAN engine of the second NAN device.

Illustratively, the SDF is of a Publish or a Subscribe type. The SDF includes Ranging Info and NAN Availability Attribute.

In S356, the service/application of the first NAN device transmits a ranging request (Range_Request) to the NAN engine of the first NAN device.

In S358, the service/application of the second NAN device transmits a Range_Request to the NAN engine of the second NAN device.

In S360, the NAN engine of the first NAN device transmits a NAN ranging request frame to the NAN engine of the second NAN device.

Illustratively, upon receiving a Range _Request primitive, the NAN engine of the first NAN device constructs and transmits a NAN ranging request frame to initiate the ranging session initiation procedure.

Illustratively, the NAN ranging request frame includes Ranging Info, NAN Availability Attribute, and RSUA.

In S362, the NAN engine of the second NAN device transmits a Range_Request Indication to the service/application of the second NAN device.

Illustratively, upon receiving the ranging request frame, the NAN engine of the second NAN device checks whether an Auto Response is set as True. In the case that the Auto Response is set as False, the NAN engine of the second NAN device generates a Range_Request_Indication event and transmits the Range_Request Indication event to an application layer. That is, the NAN engine of the second NAN device transmits the Range_Request_Indication to the service/application of the second NAN device.

In S364, the service/application of the second NAN device transmits a Range_Response to the NAN engine of the second NAN device.

Illustratively, the application layer rejects or accepts the event by initiating a Range_Request Indication primitive, and uses Range_Request_Indication as Range_Response.

In S366, the NAN engine of the second NAN device transmits a NAN ranging response frame to the NAN engine of the first NAN device.

Illustratively, in the case that the Range_Request Indication primitive is received or the Auto Response is set as True and acts as the Range_Response, the NAN engine constructs and transmits the NAN ranging response frame to the peer entity.

Illustratively, the NAN ranging response frame includes Ranging Info, NAN Availability Attribute, and RSUA.

In S368, one or more FTM ranging modes are performed between the NAN engine of the first NAN device and the NAN engine of the second NAN device.

In S370, the NAN engine of the first NAN device transmits a NAN ranging report frame to the NAN engine of the second NAN device.

Illustratively, the NAN ranging report frame includes an FTM ranging report.

In S372, the NAN engine of the second NAN device transmits a ranging result (Range_Result) to the service/application of the second NAN device.

In S374, the NAN engine of the first NAN device transmits the Range_Result to the service/application of the first NAN device.

### NAN ranging capability exchange

Devices exchange ranging capabilities thereof by carrying related NAN attributes in the NAN SDF and the NAN beacon frame.

The NAN beacon frame carries the following attributes:
- Ranging Information Attribute, indicating whether local coordinates of a location configuration information (LCI) of the NAN device are available, whether geospatial LCI is available, and whether civic location information is available, and indicates a last movement;
- Device Capability Attribute.

The NAN SDF carries the following attributes:
- Ranging Information Attribute;
- Device Capability Attribute;
- Service Descriptor Extension Attribute, indicating an update indication of the service, a ranging limitation of the service, and control information of the service (whether to require a further service discovery, whether to require a data path, QoS requirements, whether to require ranging, and the like);
- Ranging Attribute, carrying a medium access control (MAC) address of the device, a designated ranging mode (the FTM ranging mode), availability information of the channel and bandwidth, and the like.

### NAN ranging session initiation, update, and termination

A NAN device initiating the NAN ranging session initiation phase is referred to as a ranging initiator. A responder device is a ranging responder. The ranging initiator and the ranging responder respectively act as an FTM initiator (an initiator station (STA)) and an FTM responder (a responder STA) in the corresponding FTM session.

The ranging initiator initiates the NAN ranging session initiation by transmitting a ranging request frame to the ranging responder. The ranging request frame includes the following attributes:
- Ranging Setup Attribute, setting up, updating, and terminating a ranging session for the NAN device. The FTM ranging-related parameters should be carried in setting up the ranging session, new ranging scheduling parameters should be indicated in updating the ranging session, and termination indication should be indicated and the reason for the ranging termination should be carried in terminating the ranging session.
- Ranging Information Attribute.
- NAN Availability Attribute, carrying potential, conditional, and committed further availability windows (FAWs) applicable to ranging operations. Once a ranging time table is established, the NAN Availability Attribute consists of one or more ranging common resource blocks (CRBs). The CRBs are essentially an overlapping portion of the commitment FAWs of two NAN ranging devices, and selected by a time bitmap in the Ranging Setup Attribute. The two NAN ranging devices should ensure that the ranging time table contains sufficient ranging CRBs to support required FTM parameters.

The ranging initiator updates an existing ranging session by transmitting a ranging request frame to the ranging responder.

The ranging responder transmits a time table update notification action frame (NAF) containing potential, conditional, and committed FAWs to request to update the ranging session.

The ranging session updating process is the same as the ranging initiation process.

Upon receiving a cancel ranging (Cancel_Range) primitive, the NAN ranging device terminates the ranging session by transmitting a ranging termination frame to a peer device. The NAN ranging device may decide to terminate a ranging session at any time for any reason by transmitting a ranging termination frame to a peer ranging device. Either the ranging initiator or the ranging responder can terminate the ranging session. In the case that the ranging session terminates, the resource block committed in the corresponding ranging session is released.

### NAN ranging report

In the case that a Ranging Report Required bit in the Ranging Setup Attribute in the ranging response frame is set to 1, the ranging initiator should transmit a ranging report frame containing the FTM range report attribute to the ranging responder after each ranging session.

### FTM ranging

In the case that the ranging initiator and the ranging responder have successfully negotiated the session, both the ranging initiator and the ranging responder should perform the FTM ranging procedure in each CRB of the established ranging scheduling. The FTM program should run in an ASAP=1 and single burst mode.

In each scheduled ranging CRB, the ranging initiator should transmit an initial FTM request frame (IFTMR) to the ranging responder to initiate a single burst as soon as possible (ASAP) FTM session. The Min Delta FTM parameters and the FTM Format Bandwidth in the initial FTM request frame should be the same as the ranging parameters of the latest ranging response frame. The ranging initiator may change other parameters of the initial FTM request frame, but the changed parameters are valid only for the current burst instance. FIG. 4 is a schematic diagram of a single burst FTM ranging mode according to some embodiments of the present disclosure.

### The non-TB ranging mode

### Non-TB ranging session negotiation phase

An initiating STA (ISTA) transmits an IFTMR to initiate a ranging session request, which is set as follows.

A Trigger field is set to 1 to represent initiation or continuous transmission of the FTM frame.

A set of scheduling parameters in a ranging parameters element describes availability of the ISTA for measurement exchange. The negotiated parameters include the following parameters:
- A maximum support bandwidth in a Format and Bandwidth sub-field.
- A maximum number of LTF repetitions indicated in a Max Responding STA to Initiating STA (R2I) Repetition sub-field and receivable in a lead code of the R2I null data physical layer protocol data unit (NDP).
- A maximum number of LTF repetitions indicated in a Max R2I Repetition sub-field and transmittable in a lead code of the Initiating STA to Responding STA (I2R) NDP.
- A maximum number of temporal-spatial streams transmitted in the R2I NDP and receivable by the bandwidth less than or equal to 80 MHz, which is indicated in a Max R2I STS < 80 MHz sub-field.
- A maximum number of temporal-spatial streams transmitted in the R2I NDP and receivable by the bandwidth greater than 80 MHz, which is indicated in a Max R2I STS > 80 MHz sub-field.
- A maximum number of temporal-spatial streams transmittable by the bandwidth less than or equal to 80 MHz in the I2R NDP, which is indicated in a Max I2R STS < 80 MHz sub-field.
- A maximum number of temporal-spatial streams transmittable by the bandwidth greater than 80 MHz in the I2R NDP, which is indicated in a Max I2R STS > 80 MHz sub-field.
- A maximum number of LTF totals receivable in the R2I NDP and indicated in a Max R2I LTF Total sub-field, which includes all numbers of repetitions.
- A maximum number of LTF totals transmittable in the I2R NDP and indicated in a Max I2R LTF Total sub-field, which includes all numbers of repetitions.
- Immediate or delayed feedback is provided in the I2R LMR by setting the I2R Immediate Feedback sub-field to 1 or 0.

The IFTMR includes a non-TB specific sub-element.

A Responding STA (RSTA) transmits an initial FTM frame (IFTM) including a ranging parameters element within 10 ms. A value of a Status Indication field represents a request result.

### Non-TB ranging sounding phase

The ISTA initiates a non-TB ranging instance by transmitting a ranging null data physical layer protocol data unit announcement (NDPA) frame addressing to the RSTA. After a short interframe space (SIFS), the ranging initiator transmits an NDP to the ranging responder. The ranging responder also transmits an NDP to the ranging initiator as a response to the correctly received ranging NDP announcement frame.

### Non-TB ranging reporting phase

The non-TB ranging reporting phase includes immediate reporting and delayed reporting based on the reporting time.

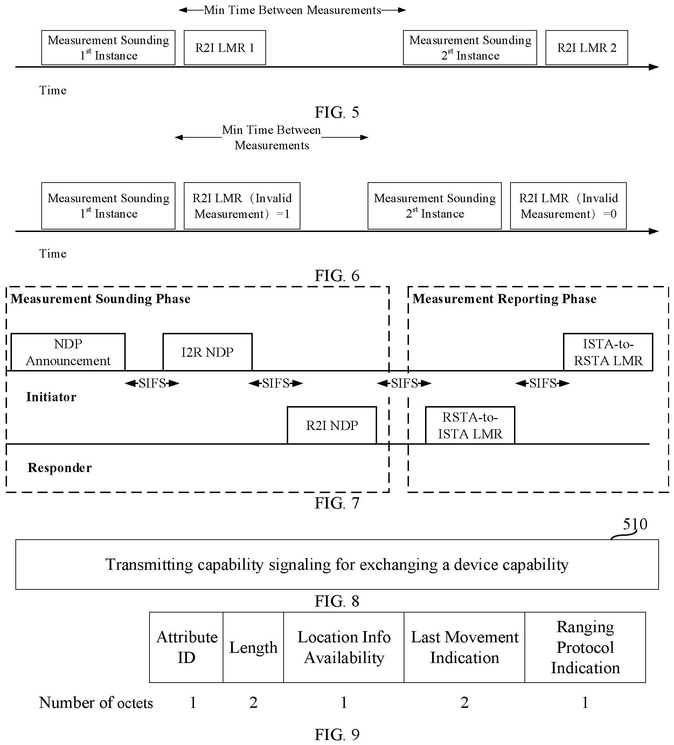

The immediate reporting indicates that the responder transmits a result of a current ranging instance after each measurement instance. FIG. 5 is a schematic diagram of a non-TB ranging mode supporting immediate feedback reporting according to some embodiments of the present disclosure.

The delayed reporting indicates that a current measurement report carries a measurement result of a previous measurement instance, and Invalid Measurement is set to "1" as a first measurement report does not include valid measurement information. FIG. 6 is a schematic diagram of a non-TB ranging mode supporting delayed feedback reporting according to some embodiments of the present disclosure.

The immediate reporting and the delayed reporting are both one-way feedback, and the one-way feedback is mandatory. For two-way feedback, whether the initiator STA needs to report the measurement results to the responder STA is determined in the negotiation phase. FIG. 7 is a schematic diagram of a non-TB ranging mode supporting two-way feedback according to some embodiments of the present disclosure.

**The technical solutions according to the embodiments of the present disclosure are described in several embodiments.**

In some embodiments of the present disclosure, the capability signaling for exchanging the device capability is modified and/or added, such that the enhanced distributed channel access (EDCA)-based enhanced FTM ranging mode or the non-trigger-based (non-TB) ranging mode is used between the first NAN device and the second NAN device for ranging. The first NAN device as a transmitter of the capability signaling transmits the capability signaling for exchanging the device capability, and the second NAN device as a receiver of the capability signaling receives the capability signaling for exchanging the device capability.

FIG. 8 is a flowchart of a method for exchanging a device capability of a NAN device according to some embodiments of the present disclosure. The method is applicable to a first NAN device, and includes the following process.

**In S510,** the first NAN device transmits capability signaling for exchanging a device capability.

Illustratively, the capability signaling indicates whether the first NAN device supports a related capability of a target ranging mode. Illustratively, the capability signaling indicates whether a NAN device transmitting the capability signaling supports a related capability of a target ranging mode. In some embodiments, the capability signaling directly indicates whether the first NAN device supports the target ranging mode, or indirectly indicates support of capabilities related to the target ranging capability by the first NAN device, which is not specifically limited in the present disclosure.

The capability signaling is used for exchanging the device capability of the first NAN device with a device that receives the capability signaling. In some embodiments, the second NAN device receives the capability signaling, and the capability signaling is used for exchanging the device capability of the first NAN device with the second NAN device. Similarly, in some embodiments, the second NAN device transmits the capability signaling for exchanging the device capability to the first NAN device. The first NAN device transmitting the capability signaling in the embodiments is only exemplary in the case that the first NAN device is the transmitter device of the capability signaling. Those skilled in the art should understand that other embodiments of the present disclosure may be implemented by other NAN devices, for example, the first NAN device or the second NAN device.

Illustratively, the target ranging mode is a ranging mode different from the FTM ranging mode. In some embodiments, the target ranging mode is different from a traditional FTM ranging mode and is not specifically limited. In some embodiments, a ranging accuracy of the target ranging mode is higher than a ranging accuracy of the traditional FTM ranging mode. For example, the target ranging mode is an enhanced ranging mode based on the traditional FTM ranging mode, or other ranging mode different from the time-based measurement mode. In some embodiments, the target ranging mode include, but is not limited to the enhanced EDCA FTM ranging mode or the non-TB ranging mode. Illustratively, the enhanced EDCA FTM ranging mode is also referred to the EDCA-based enhanced FTM ranging mode in the present disclosure.

It should be noted that the traditional FTM ranging mode in the present disclosure is a ranging mode designed before the target ranging mode and is an FTM ranging mode provided before the target ranging mode in related protocols of the NAN device and/or the NAN device, and the traditional FTM ranging mode and the EDCA-based enhanced FTM ranging mode are different ranging modes.

Those of skilled in the art can understand that the above description of the target ranging mode is exemplary, and the target ranging mode may also include other ranging modes.

In summary, in the method according to the embodiments of the present disclosure, whether the first NAN device supports the related capability of the target ranging mode is indicated by the capability signaling for exchanging the device capability, and the device capability is exchanged using the ranging mode different from the traditional FTM ranging mode, such that the target ranging mode supported by the first NAN device is expanded, different requirements on ranging of the NAN device in different scenarios are met, and the ranging accuracy is improved using the target ranging mode.

In the present disclosure, the capability signaling includes at least one of the following three implementations.

In a first implementation, the capability signaling indicates whether the first NAN device supports the target ranging mode.

In a second implementation, the capability signaling indicates which target ranging mode is used by the service of the first NAN device (in the case that the first NAN device supports the target ranging mode).

In a third implementation, the capability signaling further indicates whether the first NAN device supports a high efficiency (HE) physical layer (PHY) mode.

The three implementations are described hereinafter in combination with the embodiments.

**In** the first implementation, the capability signaling indicates whether the first NAN device supports the target ranging mode.

Illustratively, the capability signaling further indicates support of the target ranging mode by the first NAN device. The target ranging mode includes the EDCA-based enhanced FTM ranging mode and/or the non-TB ranging mode. In some embodiments, the capability signaling is carried in a NAN beacon frame or a NAN SDF.

In some embodiments, the capability signaling includes a Ranging Protocol Indication field. The Ranging Protocol Indication field indicates whether the first NAN device supports the target ranging mode. In some embodiments, the capability signaling is Ranging Information Attribute, and whether the first NAN device supports the target ranging mode is indicated by newly adding the Ranging Protocol Indication field in the Ranging Information Attribute. FIG. 9 is a schematic diagram of capability signaling according to some embodiments of the present disclosure. Using the capability signaling being the Ranging Information Attribute as an example, the capability signaling includes an Attribute Identifier (ID) field, a Length field, a Location Info Availability field, a Last Movement Indication field, and a Ranging Protocol Indication field. In some embodiments, FIG. 9 further shows the numbers of octets of the fields in the capability signaling. For example, the Attribute ID field occupies 1 octet, the Length field occupies 2 octets, the Location Info Availability field occupies 1 octet, the Last Movement Indication occupies field 2 octets, and the Ranging Protocol Indication field occupies 1 octet.

The Ranging Protocol Indication field in the capability signaling is further described.

**The Ranging Protocol Indication field includes first indication information and second indication information.**

In some embodiments, the Ranging Protocol Indication field includes first indication information and second indication information. For example, the first indication information is "EDCA-based Enhanced FTM Indication information," and the second indication information is "Non-TB Indication information."

The first indication information indicates whether the first NAN device supports the EDCA-based enhanced FTM ranging mode, and/or the second indication information indicates whether the first NAN device supports the non-TB ranging mode.

In some embodiments, in the case that the first indication information takes a first value, the first NAN device supports the EDCA-based enhanced FTM ranging mode; or, in the case that the first indication information takes a second value, the first NAN device does not support the EDCA-based enhanced FTM ranging mode.

In some embodiments, in the case that the second indication information takes a third value, for example, 1, the first NAN device supports the non-TB ranging mode; or, in the case that the second indication information takes a fourth value, the first NAN device does not support the non-TB ranging mode.

Illustratively, the first indication information and the second indication information respectively indicate the EDCA-based enhanced FTM ranging mode and/or the non-TB ranging mode, or, the first indication information and the second indication information jointly indicate the EDCA-based enhanced FTM ranging mode and/or the non-TB ranging mode. It should be understood that the first indication information and the second indication information belong to the same field or different fields, indication modes of the first indication information and the second indication information are explicitly or implicitly. The embodiments of the present disclosure do not specifically limit the indication modes and the fields of the first indication information and the second indication information. Similarly, other information, for example, the indication mode and the field of the third indication information are also not specifically limited.

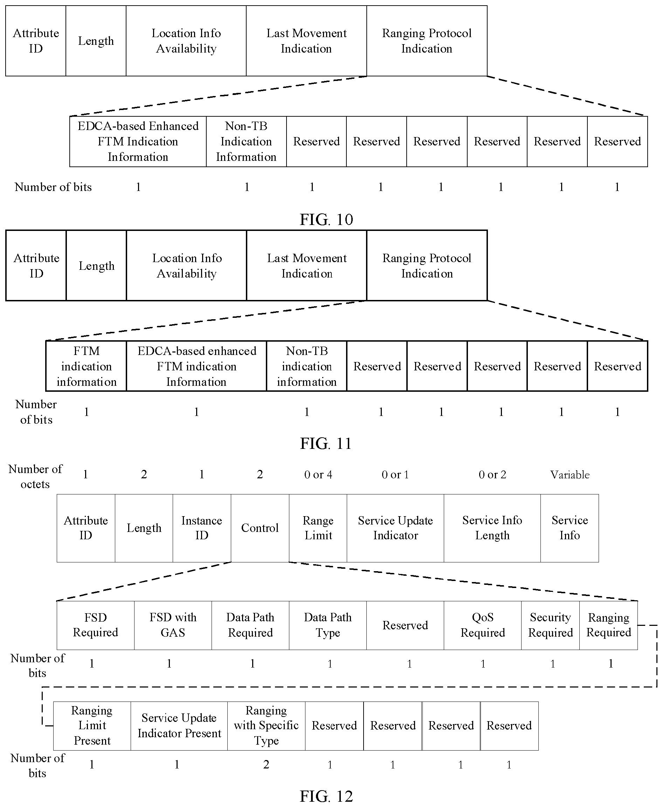

FIG. 10 is a schematic diagram of capability signaling according to some embodiments of the present disclosure. Using the capability signaling being the Ranging Information Attribute as an example, the Ranging Protocol Indication field in the capability signaling is further described.

The capability signaling includes the Ranging Protocol Indication field, and the Ranging Protocol Indication field includes the EDCA-based Enhanced FTM Indication information and the Non-TB Indication information. The first indication information is the EDCA-based Enhanced FTM Indication information, and indicates whether the first NAN device supports the EDCA-based Enhanced FTM ranging mode. The second indication information is the Non-TB Indication information, and indicates whether the first NAN device supports the non-TB ranging mode. Illustratively, the EDCA-based Enhanced FTM Indication information and the Non-TB Indication information are bits information. FIG. 10 further shows the numbers of bits of the pieces of information in the Ranging Protocol Indication field. That is, the EDCA-based Enhanced FTM Indication information and the Non-TB Indication information occupy 1 bit. The Ranging Protocol Indication field further includes six pieces of reserved information occupying 1 bit. In some embodiments, the value of the reserved information is 0.

It should be noted that the number of octets and the number of bits of the field or information are exemplary. Those of skilled in the art can understand that the number of octets and the number of bits of the field or information may be another value in some embodiments.

In some embodiments, the EDCA-based Enhanced FTM Indication information and the Non-TB Indication information in the Ranging Protocol Indication field indicate support of the EDCA-based enhanced FTM ranging mode and/or the non-TB ranging mode by the NAN device supporting the HE PHY mode.

In some embodiments, in the case that the Ranging Protocol Indication field includes the EDCA-based Enhanced FTM Indication information and the Non-TB Indication information, the capability signaling further includes Ranging Attribute. The Ranging Attribute indicates whether the first NAN device supports the traditional FTM ranging mode. Specifically, the Ranging Attribute includes a Ranging Protocol field. Specifically, in the case that the Ranging Protocol field takes a value of 0, the first NAN device supports the traditional FTM ranging mode. In some embodiments, the Ranging Attribute indicates support of the traditional FTM ranging mode by the NAN device supporting the HT or VHT mode.

### The Ranging Protocol Indication field includes third indication information.

In some embodiments, the Ranging Protocol Indication field includes the first indication information and the second indication information, and further includes the third indication information. The first indication information indicates whether the first NAN device supports the EDCA-based enhanced FTM ranging mode, the second indication information indicates whether the first NAN device supports the non-TB ranging mode, and the third indication information indicates whether the first NAN device supports the traditional FTM ranging mode.

In some embodiments, in the case that the third indication information takes a fifth value, the first NAN device supports the traditional FTM ranging mode. For example, the third indication information takes a value of 0. In the case that the third indication information takes a sixth value, the first NAN device does not support the traditional FTM ranging mode.

FIG. 11 is a schematic diagram of capability signaling according to some embodiments of the present disclosure. Using the capability signaling being the Ranging Information Attribute as an example, the Ranging Protocol Indication field in the capability signaling is further described.

The capability signaling includes the Ranging Protocol Indication field, and the Ranging Protocol Indication field includes FTM Indication information, the EDCA-based Enhanced FTM Indication information, and the Non-TB Indication information. The first indication information is the EDCA-based Enhanced FTM Indication information, the second indication information is the Non-TB Indication information, and the third indication information is the FTM Indication information. Illustratively, the FTM Indication information, the EDCA-based Enhanced FTM Indication information, and the Non-TB Indication information are bits information. FIG. 11 further shows the numbers of bits of the pieces of information in the Ranging Protocol Indication field. That is, the FTM Indication information, the EDCA-based Enhanced FTM Indication information, and the Non-TB Indication information each occupies 1 bit. The Ranging Protocol Indication field further includes five pieces of reserved information occupying 1 bit. In some embodiments, the value of the reserved information is 0.

In some embodiments, the EDCA-based Enhanced FTM Indication information and the Non-TB Indication information in the Ranging Protocol Indication field indicate support of the EDCA-based enhanced FTM ranging mode and/or the non-TB ranging mode by the NAN device supporting the HE PHY mode, and the FTM Indication information indicates support of the traditional FTM ranging mode by the NAN device supporting the HT or VHT mode.

In some embodiments, the capability signaling further includes the Ranging Attribute, and the Ranging Attribute indicates whether the first NAN device supports the traditional FTM ranging mode. Specifically, the Ranging Attribute includes the Ranging Protocol field. Specifically, in the case that the Ranging Protocol field takes a value of 0, the first NAN device supports the traditional FTM ranging mode.

In summary, in the method according to the embodiments of the present disclosure, whether the first NAN device supports the target ranging mode is indicated by the capability signaling for exchanging the device capability, and the device capability is exchanged using the ranging mode different from the traditional FTM ranging mode, such that the target ranging mode supported by the first NAN device is expanded, different requirements on ranging of the NAN device in different scenarios are met, and the ranging accuracy is improved using the target ranging mode.

**In** the second implementation, the capability signaling indicates the target ranging mode used by the service of the first NAN device.

Illustratively, the capability signaling indicates the target ranging mode used by the service of the first NAN device. In some embodiments, the capability signaling indicates the target ranging mode used by the service of the first NAN device from the ranging modes supported by the first NAN device. The target ranging mode generally includes one ranging mode. In some embodiments, the capability signaling is carried in a NAN SDF.

In some embodiments, the capability signaling includes Ranging with Specific Type information. The Ranging with Specific Type information indicates the target ranging mode used by the service of the first NAN device. Illustratively, the Ranging with Specific Type information is carried in a Control field of the capability signaling. Illustratively, the capability signaling is Service Descriptor Extension Attribute.

Illustratively, the target ranging mode includes the EDCA-based Enhanced FTM Indication information and the Non-TB Indication information. In the case that the Ranging with Specific Type information takes a first value, the capability signaling indicates that the target ranging mode used by the service of the first NAN device is the EDCA-based enhanced FTM ranging mode; and/or in the case that the Ranging with Specific Type information takes a second value, the capability signaling indicates that the target ranging mode used by the service of the first NAN device is the non-TB ranging mode.

Furthermore, the target ranging mode further includes the traditional FTM ranging mode. In the case that the Ranging with Specific Type information takes a third value, the capability signaling indicates that the target ranging mode used by the service of the first NAN device is the traditional FTM ranging mode.

FIG. 12 is a schematic diagram of capability signaling according to some embodiments of the present disclosure. Using the capability signaling being the Service Descriptor Extension Attribute as an example, the capability signaling includes an Attribute ID field, a Length field, an Instance ID field, a Control field, a Range Limit field, a Service Update Indicator field, a Service Info Length field, and a Service Info field. In some embodiments, FIG. 12 further shows numbers of octets of the fields in the capability signaling. For example, the Attribute ID field occupies 1 octet, the Length field occupies 2 octets, the Instance ID field occupies 1 octet, the Control field occupies 2 octets, the Range Limit field occupies 0 or 4 octets, the Service Update Indicator field occupies 0 or 1 octet, the Service Info Length field occupies 0 or 2 octets, and the Service Info field occupies a variable number of octets.

Illustratively, the Control field includes: FSD Required information, FSD with GAS information, Data Path Required information, Data Path Type information, Reserved information, Quality of Service (QoS) Required information, Security Required information, Ranging Required information, Ranging Limit Present information, Service Update Indicator Present information, and Ranging with Specific Type information. Illustratively, the Reserved information can be implemented as multicast type information. In some embodiments, the Control field further includes four pieces of reserved information each occupying 1 bit. Illustratively, FIG. 12 further shows the numbers of bits of the pieces of information in the Control field. That is, the Ranging with Specific Type information occupies 2 bits, and other pieces of information each occupies 1 bit.

In some embodiments, in the case that the Ranging with Specific Type information takes a binary value of 00, the Ranging with Specific Type information indicates that the target ranging mode used by the service of the first NAN device is the traditional FTM ranging mode; in the case that the Ranging with Specific Type information takes a binary value 01, the Ranging with Specific Type information indicates that the target ranging mode used by the service of the first NAN device is the non-TB ranging mode; or, in the case that the Ranging with Specific Type information takes a binary value of 10, the Ranging with Specific Type information indicates that the target ranging mode used by the service of the first NAN device is the EDCA-based enhanced FTM ranging mode.

In summary, in the method according to the embodiments of the present disclosure, the target ranging mode used by the service of the first NAN device is indicated by the capability signaling for exchanging the device capability, and the device capability is exchanged using the ranging mode different from the traditional FTM ranging mode, such that the target ranging mode supported by the first NAN device is expanded, different requirements on ranging of the NAN device in different scenarios are met, and the ranging accuracy is improved using the target ranging mode.

**In the third implementation,** the capability signaling further indicates whether the first NAN device supports an HE PHY mode.

Illustratively, the NAN device supporting the HE PHY mode, for example, an HE STA and an extremely high throughout (EHT) STA, further supports the EDCA-based enhanced FTM ranging mode and/or the non-TB ranging mode in the IEEE 802.11az in the present disclosure.

Illustratively, the capability signaling indicates support of the HE PHY mode by the first NAN device. In some embodiments, the capability signaling is carried in the NAN beacon frame or the NAN SDF.

In some embodiments, the capability signaling includes Extended PHY Mode information. The Extended PHY Mode information indicates support of the HE PHY mode by the first NAN device. In some embodiments, the capability signaling is a Device Capability Attribute. In the case that the Extended PHY Mode information in the Device Capability Attribute takes a first value, the capability signaling indicates that the first NAN device supports the HE PHY mode; and/or in the case that the Extended PHY Mode information takes a second value, the capability signaling indicates that the first NAN device does not support the HE PHY mode. Furthermore, in the case that the Extended PHY Mode information takes the second value, the capability signaling indicates that the first NAN device supports a high throughout (HT) PHY mode or a very high throughout (VHT) PHY mode.

Furthermore, the capability signaling further indicates support of a channel bandwidth mode of the first NAN device. In some embodiments, the capability signaling further indicates support of a channel bandwidth mode of the first NAN device, or indicates support of a plurality of channel bandwidth modes of the first NAN device concurrently.

Furthermore, the capability signaling further includes at least one of first bandwidth indication information or second bandwidth indication information. In the case that the capability signaling includes the first bandwidth indication information and the second bandwidth indication information, the capability signaling indicates support of two channel bandwidth modes. Illustratively, the first bandwidth indication information is 80+80 MHz bandwidth indication information, and the second bandwidth indication information is 160 MHz bandwidth indication information.

Specifically, in a case that the Extended PHY Mode information takes the first value, and the first bandwidth indication information takes a third value, the capability signaling indicates that the first NAN device supports the HE PHY mode and a first bandwidth; and/or
in a case that the Extended PHY Mode information takes the first value, and the first bandwidth indication information takes a fourth value, the capability signaling indicates that the first NAN device supports the HE PHY mode but does not support a first bandwidth; and/or
in a case that the Extended PHY Mode information takes the first value, and the second bandwidth indication information takes a fifth value, the capability signaling indicates that the first NAN device supports the HE PHY mode and a second bandwidth; and/or
in a case that the Extended PHY Mode information takes the first value, and the second bandwidth indication information takes a sixth value, the capability signaling indicates that the first NAN device supports the HE PHY mode but does not support a second bandwidth.

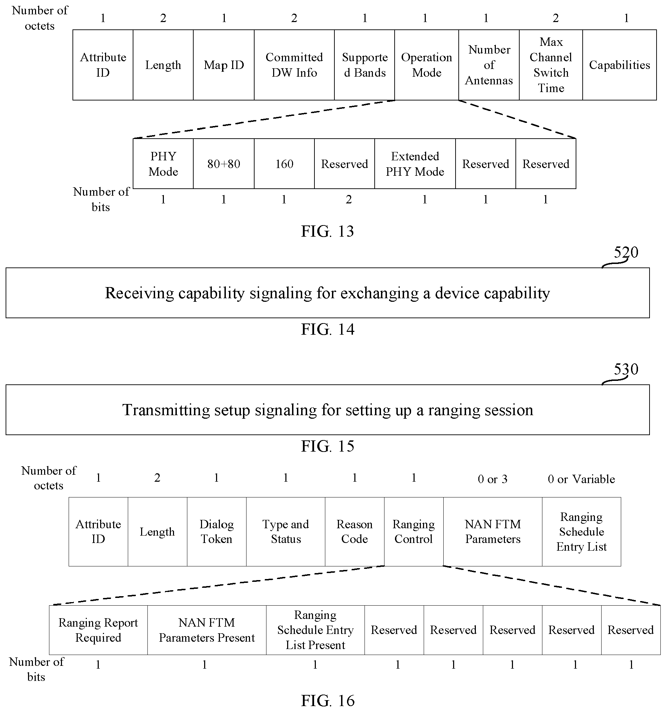

FIG. 13 is a schematic diagram of capability signaling according to some embodiments of the present disclosure. Using the capability signaling being the Device Capability Attribute as an example, the capability signaling includes an Attribute ID field, a Length field, a Map ID field, a Committed Window (DW) Info field, a Supported Bands field, an Operation Mode field, a Number of Antennas field, a Max Channel Switch Time field, and a Capabilities field. In some embodiments, FIG. 13 further shows the numbers of octets of the fields in the capability signaling. For example, the Attribute ID field occupies 1 octet, the Length field occupies 2 octets, the Map ID field occupies 1 octet, the Committed DW Info field occupies 2 octets, the Supported Bands field occupies 1 octet, the Operation Mode field occupies 1, the Number of Antennas field occupies 1 octet, the Max Channel Switch Time field occupies 2 octets, and the Capabilities field occupies 1 octet.

The Operation Mode field in the capability signaling is further described. In some embodiments, the Operation Mode field includes: PHY mode information, 80+80 MHz Bandwidth Indication information (80+80), 160 MHz Bandwidth Indication information (160), Reserved information, and Extended PHY Mode information. FIG. 13 further shows numbers of bits of pieces of information in the Operation Mode field. The reserved information can be implemented as paging NDL support, and the number of bits of the paging NDL support is 2. Illustratively, the Operation Mode field further includes two pieces of reserved information each occupying 1 bit. Other pieces of information in the Operation Mode field each occupies 1 bit.

The first bandwidth indication information is 80+80 MHz Bandwidth Indication information, which indicates whether the first NAN device supports the first bandwidth; and the second bandwidth indication information is 160 MHz Bandwidth Indication information, which indicates whether the first NAN device supports the second bandwidth.

Table 1 illustrates the PHY mode information, the 80+80 MHz Bandwidth Indication information, the 160 MHz Bandwidth Indication information, and the Extended PHY Mode information in the Operation Mode field.

**Table 1**

| **PHY Mode** | **80+80 MHz bandwidth indication** | **160 MHz bandwidth indication** | **Extended PHY mode** | **Description** |
|---|---|---|---|---|
| 0 | 0 | 0 | Reserved information | Supporting the HT PHY mode |
| 1 | 0 | 0 | Reserved information | Supporting the VHT PHY mode, not supporting the 80+80 MHz bandwidth mode and the 160 MHz bandwidth mode |
| 1 | 1 | 0 | Reserved information | Supporting the VHT PHY mode and the 80+80 MHz bandwidth mode |
| 1 | 0 | 1 | Reserved information | Supporting the VHT PHY mode and the 160 MHz bandwidth mode |
| 1 | 1 | 1 | Reserved information | Supporting the VHT PHY mode, the 80+80 MHz bandwidth mode, and the 160 MHz bandwidth mode |
| 1 | 0 | 0 | 1 | Supporting the HE PHY mode, not supporting the 80+80 MHz bandwidth mode and the 160 MHz bandwidth mode |
| 1 | 1 | 0 | 1 | Supporting the HE PHY mode, and the 80+80 MHz bandwidth mode |
| 1 | 0 | 1 | 1 | Supporting the HE PHY mode, and the 160 MHz bandwidth mode |
| 1 | 1 | 1 | 1 | Supporting the HE PHY mode, the 80+80 MHz bandwidth mode, and 160 MHz bandwidth mode |

It should be noted that in the case that the Extended PHY Mode information is the reserved information, the Extended PHY Mode information takes a value of 0.

Illustratively, in the case that the PHY Mode information takes a value of 0, the 80+80 MHz Bandwidth Indication information takes a value of 0, the 160 MHz Bandwidth Indication information takes a value of 0, and the Extended PHY Mode information takes a value of 0, the first NAN device only supports the HT PHY mode. Illustratively, the first NAN device does not support the VHT PHY mode or the HE PHY mode, but only supports the HT PHY mode.

In the case that the PHY Mode information takes a value of 1, the 80+80 MHz Bandwidth Indication information takes a value of 0, the 160 MHz Bandwidth Indication information takes a value of 0, and the Extended PHY Mode information takes a value of 0, the first NAN device supports the VHT PHY mode, but does not support the 80+80 MHz bandwidth mode or the 160 MHz bandwidth mode.

In the case that the PHY mode information takes a value of 1, the 80+80 MHz Bandwidth Indication information takes a value of 1, the 160 MHz Bandwidth Indication information takes a value of 0, and the Extended PHY Mode information takes a value of 0, the first NAN device supports the VHT PHY mode and the 80+80 MHz bandwidth mode.

In the case that the PHY Mode information takes a value of 1, the 80+80 MHz Bandwidth Indication information takes a value of 0, the 160 MHz Bandwidth Indication information takes a value of 1, and the Extended PHY Mode information takes a value of 0, the first NAN device supports the VHT PHY mode and the 160 MHz bandwidth mode.

In the case that the PHY Mode information takes a value of 1, the 80+80 MHz Bandwidth Indication information takes a value of 1, the 160 MHz Bandwidth Indication information takes a value of 1, and the Extended PHY Mode information takes a value of 0, the first NAN device supports the VHT PHY mode, the 80+80 MHz bandwidth mode, and the 160 MHz bandwidth mode.

In the above five embodiments, the Extended PHY Mode information takes a second value, and the capability signaling indicates that the first NAN device does not support the HE PHY mode.

In the case that the PHY Mode information takes a value of 1, the 80+80 MHz Bandwidth Indication information takes a value of 0, the 160 MHz Bandwidth Indication information takes a value of 0, and the Extended PHY Mode information takes a value of 1, the first NAN device supports the HE PHY mode, but does not support the 80+80 MHz bandwidth mode or the 160 MHz bandwidth mode.

In the case that the PHY Mode information takes a value of 1, the 80+80 MHz bandwidth indication information takes a value of 1, the 160 MHz Bandwidth Indication information takes a value of 0, and the Extended PHY Mode information takes a value of 1, the first NAN device supports the HE PHY mode and the 80+80 MHz bandwidth mode.

In the case that the PHY Mode information takes a value of 1, the 80+80 MHz Bandwidth Indication information takes a value of 0, the 160 MHz Bandwidth Indication information takes a value of 1, and the Extended PHY Mode information takes a value of 1, the first NAN device supports the HE PHY mode and the 160 MHz bandwidth mode.

In the case that the PHY Mode information is 1, the 80+80 MHz Bandwidth Indication information takes a value of 1, the 160 MHz Bandwidth Indication information takes a value of 1, and the Extended PHY Mode information takes a value of 1, the first NAN device supports the HE PHY mode, the 80+80 MHz bandwidth mode, and the 160 MHz bandwidth mode.

In the above four embodiments, the Extended PHY Mode information takes a first value, and the capability signaling indicates that the first NAN device supports the HE PHY mode.

Illustratively, the HT PHY mode, the VHT PHY mode, and the HE PHY mode are all compatible with modes of the previous versions of NAN device.

In summary, in the method according to the embodiments of the present disclosure, whether the first NAN device supports the HE PHY mode is indicated by the capability signaling for exchanging the device capability, and the device capability is exchanged using the ranging mode different from the traditional FTM ranging mode, such that the target ranging mode supported by the first NAN device is expanded, different requirements on ranging of the NAN device in different scenarios are met, and the ranging accuracy is improved using the target ranging mode.

FIG. 14 is a flowchart of a method for exchanging a device capability of a NAN device according to some embodiments of the present disclosure. The method is applicable to a second NAN device, and includes the following process.

**In** S520, the second NAN device transmits capability signaling for exchanging a device capability.

Illustratively, the capability signaling indicates whether the first NAN device supports a related capability of a target ranging mode. In some embodiments, the capability signaling directly indicates whether the first NAN device supports the target ranging mode, or indirectly indicates support of capabilities related to the target ranging capability by the first NAN device, which is not specifically limited in the present disclosure. The first NAN device transmits the capability signaling.

The capability signaling is used for exchanging the device capability of the first NAN device with a device receiving the capability signaling. In some embodiments, the second NAN device receives the capability signaling, and the capability signaling is used for exchanging the device capability of the first NAN device with the second NAN device.

Illustratively, the target ranging mode is a ranging mode different from the FTM ranging mode. In some embodiments, the target ranging mode is different from the traditional FTM ranging mode and is not specifically limited. In some embodiments, a ranging accuracy of the target ranging mode is higher than a ranging accuracy of the traditional FTM ranging mode. For example, the target ranging mode is an enhanced ranging mode based on the traditional FTM ranging mode, or other ranging mode different from the time-based measurement mode. In some embodiments, the target ranging mode include, but is not limited to the EDCA-based enhanced FTM ranging mode or the non-TB ranging mode. Those of skilled in the art should understand that the description of the target ranging mode is exemplary, and the target ranging mode may include other ranging modes.

In the present disclosure, the capability signaling includes at least one of the following three implementations.

In a first implementation, the capability signaling indicates whether the first NAN device supports the target ranging mode.

In a second implementation, the capability signaling indicates the target ranging mode used by the service of the first NAN device.

In a third implementation, the capability signaling further indicates whether the first NAN device supports an HE PHY mode.

The three implementations described in the embodiments are the same as the three implementations described in the embodiments corresponding to FIG. 9 to FIG. 13. For description of the three implementations, reference may be made to the above embodiments, which is not repeated in the embodiments.

In summary, in the method according to the embodiments of the present disclosure, whether the first NAN device supports the related capability of the target ranging mode is indicated by the capability signaling for exchanging the device capability, and the device capability is exchanged using the ranging mode different from the traditional FTM ranging mode, such that the target ranging mode supported by the first NAN device is expanded, different requirements on ranging of the NAN device in different scenarios are met, and the ranging accuracy is improved using the target ranging mode.

FIG. 15 is a flowchart of a method for setting up a ranging session for a NAN device according to some embodiments of the present disclosure. The method is applicable to a first NAN device, and includes the following process.

**In S530,** the first NAN device transmits setup signaling for setting up the ranging session.

Illustratively, the setup signaling indicates information related to a target ranging mode of the first NAN device. Illustratively, in some embodiments, the setup signaling indicates information related to a target ranging mode of a NAN device transmitting the setup signaling. The setup signaling is directly used for setting up the target ranging mode of the first NAN device, or indirectly indicates information related to the target ranging mode of the first NAN device, which is not specifically limited in the present disclosure.

The setup signaling is used for transmitting the device setup cases of the first NAN device to a device receiving the setup signaling. In some embodiments, the second NAN device receives the setup signaling, and the setup signaling is used for transmitting the device setup cases of the first NAN device to the second NAN device. Those skilled in the art should understand that other embodiments of the present disclosure may be implemented by other NAN devices, for example, the first NAN device or the second NAN device.

Illustratively, the target ranging mode is a ranging mode different from the FTM ranging mode. In some embodiments, the target ranging mode is different from the traditional FTM ranging mode and is not specifically limited. In some embodiments, a ranging accuracy of the target ranging mode is higher than a ranging accuracy of the traditional FTM ranging mode. For example, the target ranging mode is an enhanced ranging mode based on the traditional FTM ranging mode, or other ranging mode different from the time-based measurement mode. In some embodiments, the target ranging mode include, but is not limited to the EDCA-based enhanced FTM ranging mode or the non-TB ranging mode. Those of skilled in the art should understand that the description of the target ranging mode is exemplary, and the target ranging mode may include other ranging modes.

In summary, in the method according to the embodiments of the present disclosure, the information related to the target ranging mode of the first NAN device is indicated by the setup signaling for setting up the ranging session, the ranging mode different from the traditional FTM ranging mode is used for ranging, and a ranging parameter of the target ranging mode is negotiated, such that the target ranging mode supported by the first NAN device is expanded, different requirements on ranging of the NAN device in different scenarios are met, and the ranging accuracy is improved using the target ranging mode.

In some embodiments of the present disclosure, the setup signaling is used for setting up the target ranging mode from candidate ranging modes supported by the first NAN device. In some embodiments, the setup signaling is Ranging Setup attribute, and the target ranging mode from candidate ranging modes supported by the first NAN device is set up based on the Ranging Setup attribute . In some embodiments, the setup signaling is carried in a ranging request frame.

In some embodiments, the target ranging mode includes the EDCA-based enhanced FTM ranging mode and/or the non-TB ranging mode. In some embodiments, the setup signaling further carries the ranging parameter of the target ranging mode for negotiation.

The setup signaling is further described hereinafter. In the embodiments, the setup signaling includes at least one of the following three implementations.

In a fourth implementation, the setup signaling includes an FTM Parameter Indication field and an Enhanced FTM Ranging Indication field.

In a fifth implementation, the setup signaling includes an FTM Parameter Indication field and an FTM Format Bandwidth field.

In a sixth implementation, the setup signaling includes a Non-TB Parameter Indication field.

**In the fourth implementation,** the setup signaling includes the FTM Parameter Indication field and the Enhanced FTM Ranging Indication field.

Illustratively, the FTM Parameter Indication field indicates that the target ranging mode used by the first NAN device is any one of the EDCA-based enhanced FTM ranging mode and a traditional FTM ranging mode, and the Enhanced FTM Ranging Indication field explicitly indicates whether the target ranging mode is the EDCA-based enhanced FTM ranging mode.

In some embodiments, the Enhanced FTM Ranging Indication field directly indicates whether the target ranging mode is the EDCA-based enhanced FTM ranging mode. For example, in the case that the Enhanced FTM Ranging Indication field takes a first value, the target ranging mode is the EDCA-based enhanced FTM ranging mode; or, in the case that the Enhanced FTM Ranging Indication field takes a second value, the target ranging mode is different from the EDCA-based enhanced FTM ranging mode.

FIG. 16 is a schematic diagram of setup signaling according to some embodiments of the present disclosure. Using the setup signaling being the Ranging Setup Attribute as an example, the setup signaling includes an Attribute ID field, a Length field, a Dialog Token field, a Type and Status field, a Reason Code field, a Ranging Control field, a NAN FTM Parameters field, and a Ranging Schedule Entry List field. In some embodiments, FIG. 16 further shows numbers of octets of the fields in the capability signaling. For example, the Attribute ID field occupies 1 octet, the Length field occupies 2 octets, the Dialog Token field occupies 1 octet, the Type and Status field occupies 1 octet, the Reason Code field occupies 1 octet, the Ranging Control field occupies 0 or 1 octet, the NAN FTM Parameters field occupies 0 or 3 octets, and the Ranging Schedule Entry List field occupies 0 octet or a variable number of octets.

Illustratively, the FTM Parameter Indication field is implemented as a NAN FTM Parameters Present indication, which is included in the Ranging Control field, and the NAN FTM Parameters Present indication indicating that the target ranging mode is any of the EDCA-based enhanced FTM ranging mode and the non-TB ranging mode.

Illustratively, the Ranging Control field includes: a Ranging Report Required field, a NAN FTM Parameters Present field, and a Ranging Schedule Entry List Present field. The Ranging Control field further includes five pieces of reserved information occupying 1 bit. Illustratively, FIG. 16 further shows the numbers of bits of the pieces of information in the Ranging Control field. That is, the pieces of information in the Ranging Control field each occupies 1 bit.

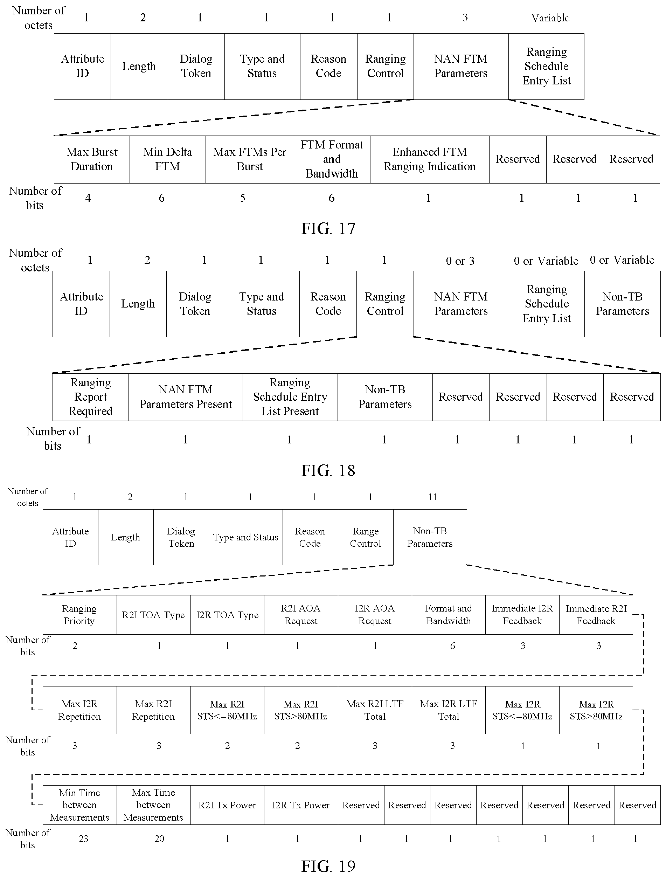

FIG. 17 is a schematic diagram of setup signaling according to some embodiments of the present disclosure. Using the setup signaling being the Ranging Setup Attribute as an example, the NAN FTM Parameters field in the Ranging Setup Attribute is further described. The NAN FTM Parameters field includes: Max Burst Duration information, Min Delta FTM information, Max FTMs Per Burst information, FTM Format and Bandwidth information, Enhanced FTM Ranging Indication information, and three pieces of Reserved information each occupying 1 bit. FIG. 17 further shows the numbers of bits the pieces of information in the NAN FTM Parameters field. For example, the Max Burst Duration information occupies 4 bits, the Min Delta FTM information occupies 6 bits, the Max FTMs Per Burst information occupies 5 bits, the FTM Format and Bandwidth information occupies 6 bits, and the Enhanced FTM Ranging Indication information occupies 1 bit.

Illustratively, the Enhanced FTM Ranging Indication field is implemented as enhanced FTM ranging indication information in the NAN FTM Parameters field, and the enhanced FTM ranging indication information explicitly indicates whether the target ranging mode is the EDCA-based enhanced FTM ranging mode. For example, the NAN FTM Parameters field further carries ranging parameters of the EDCA-based enhanced FTM ranging mode, which indicates the ranging parameters of the EDCA-based enhanced FTM ranging mode for negotiation.

In summary, in the method according to the embodiments of the present disclosure, the setup signaling for setting up the ranging session includes the FTM Parameter Indication field and the Enhanced FTM Ranging Indication field, the target ranging mode from the candidate ranging modes supported by the first NAN device is directly set up, and the ranging mode different from the traditional FTM ranging mode is used for ranging, such that the target ranging mode supported by the first NAN device is expanded, different requirements on ranging of the NAN device in different scenarios are met, and the ranging accuracy is improved using the target ranging mode.

**In the fifth implementation,** the setup signaling includes the FTM Parameter Indication field and the FTM Format Bandwidth field.

Illustratively, the FTM Parameter Indication field indicates that the target ranging mode used by the first NAN device is any one of the EDCA-based enhanced FTM ranging mode and a traditional FTM ranging mode, and the FTM Format Bandwidth field implicitly indicates whether the target ranging mode is the EDCA-based enhanced FTM ranging mode.

In some embodiments, the FTM Format Bandwidth field indirectly indicates whether the target ranging mode is the EDCA-based enhanced FTM ranging mode. For example, in the case that the FTM Format Bandwidth field takes a value within a first field value range, the target ranging mode is the EDCA-based enhanced FTM ranging mode, wherein the first field value range is a field value range corresponding to an HE type format based on the EDCA; and/or, in the case that the FTM Format Bandwidth field takes a value within a second field value range, the target ranging mode is the traditional FTM ranging mode.

With reference to the schematic diagram of the setup signaling shown in FIG. 17, illustratively, the FTM Format Bandwidth field is implemented as FTM format bandwidth information in the NAN FTM Parameters field, and the FTM format bandwidth information implicitly indicates whether the target ranging mode is the EDCA-based enhanced FTM ranging mode.

For example, in the case that the FTM Format Bandwidth field takes a value within the first field value range, the target ranging mode is the EDCA-based enhanced FTM ranging mode; and/or, in the case that the FTM Format Bandwidth field takes a value within the second field value range, the target ranging mode is different from the EDCA-based enhanced FTM ranging mode. The first field value range is from 17 to 22, and the second field value range is from 0 to 16.

In summary, in the method according to the embodiments of the present disclosure, the setup signaling for setting up the ranging session includes the FTM Parameter Indication field and the FTM Format Bandwidth field, the target ranging mode from the candidate ranging modes supported by the first NAN device is indirectly set up, and the ranging mode different from the traditional FTM ranging mode is used for ranging, such that the target ranging mode supported by the first NAN device is expanded, different requirements on ranging of the NAN device in different scenarios are met, and the ranging accuracy is improved using the target ranging mode.

**Sixth implementation,** the setup signaling includes the Non-TB Parameter Indication field.

Illustratively, the Non-TB Parameter Indication field indicates that the target ranging mode used by the first NAN device is the non-TB ranging mode.

FIG. 18 is a schematic diagram of setup signaling according to some embodiments of the present disclosure. Using the setup signaling being the Ranging Setup Attribute as an example, compared with the schematic diagram of the setup signaling according to some embodiments of the present disclosure shown in FIG. 16, the Ranging Setup Attribute further includes a Non-TB Parameters field. The Non-TB Parameters field occupies 0 or variable octets. In the Ranging Control field, compared with FIG. 16, the first reserved information is defined as a Non-TB Parameters Present indication.

Illustratively, the Non-TB Parameter Indication field is implemented as a Non-TB Parameters Present indication. For example, in the case that the Non-TB Parameters Present indication takes a first value, the target ranging mode is the non-TB ranging mode, wherein the first value is 1; and/or, in the case that the Non-TB Parameters Present indication takes a second value, the target ranging mode is different from the non-TB ranging mode. The second value is 0.

It should be noted that the Non-TB Parameters field further carries ranging parameters of the non-TB ranging mode, which indicates the ranging parameters of the non-TB ranging mode for negotiation. FIG. 19 is a schematic diagram of setup signaling according to some embodiments of the present disclosure. The Non-TB Parameters field in the Ranging Setup Attribute is further described. FIG. 19 further shows the numbers of bits the pieces of information in the Non-TB Parameters field. The Non-TB Parameters field includes: Ranging Priority information occupying 2 bits, R2I TOA Type information occupying 1 bit, I2R TOA Type information occupying 1 bit, R2I AOA Request information occupying 1 bit, I2R AOA Request information occupying 1 bit, Format and Bandwidth information occupying 6 bits, Immediate I2R Feedback information occupying 3 bits, Immediate R2I Feedback information occupying 3 bits, Max I2R Repetition information occupying 3 bits, Max R2I Repetition information occupying 3 bits, Max R2I STS≤80 MHz information occupying 2 bits, Max R2I STS>80 MHz information occupying 2 bits, max R2I LTF total information occupying 3 bits, Max I2R LTF Total information occupying 3 bits, max I2R STS≤80 MHz information occupying 1 bit, Max I2R STS>80 MHz information occupying 1 bit, min Time Between Measurements information occupying 23 bits, Max Time Between Measurements information occupying 20 bits, R2I Tx Power information occupying 1, I2R Tx Power information occupying 1 bit, and seven pieces of Reserved information each occupying 1 bit.

In summary, in the method according to the embodiments of the present disclosure, the setup signaling for setting up the ranging session includes the Non-TB Parameter Indication field, the target ranging mode from the candidate ranging modes supported by the first NAN device is set up, and the ranging mode different from the traditional FTM ranging mode is used for ranging, such that the target ranging mode supported by the first NAN device is expanded, different requirements on ranging of the NAN device in different scenarios are met, and the ranging accuracy is improved using the target ranging mode.

In some embodiments of the present disclosure, the setup signaling indicates whether the first NAN device supports the HE PHY mode. In some embodiments, the setup signaling indicates support of the HE PHY mode by the first NAN device. In some embodiments, the setup signaling is carried in the ranging request frame.

It should be noted that detailed description of indication, by the setup signaling, of whether the first NAN device supports the HE PHY mode is the same as those in third implementation herein. Thus, for detailed description of whether the first NAN device supports the HE PHY mode, reference may be made to the above embodiments, which is not described herein any further.

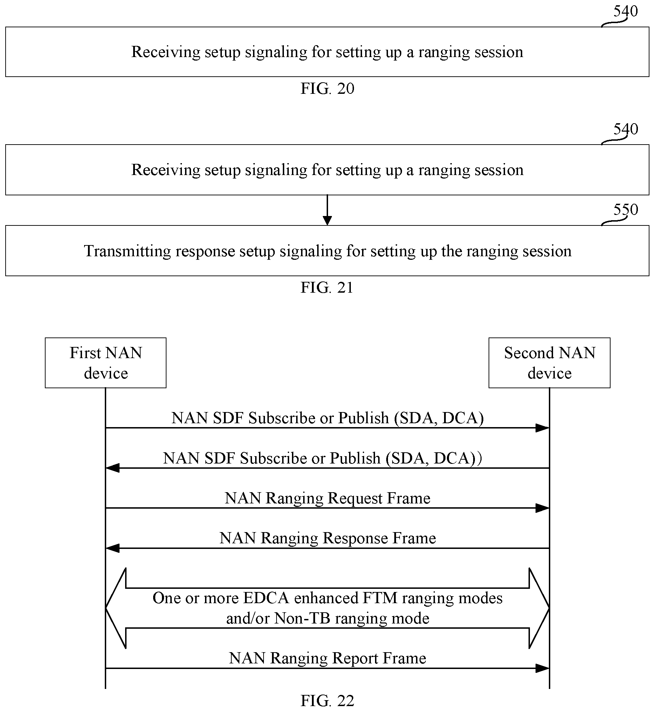

FIG. 20 is a flowchart of a method for setting up a ranging session for a NAN device according to some embodiments of the present disclosure. The method is applicable to a second NAN device, and includes the following process.

**In** S540, the second NAN device receives setup signaling for setting up the ranging session.

Illustratively, the setup signaling indicates information related to the target ranging mode of the first NAN device. In some embodiments, the setup signaling is directly used for setting up the target ranging mode of the first NAN device, or indirectly indicates information related to the target ranging mode of the first NAN device, which is not specifically limited in the present disclosure.

The setup signaling is used for transmitting the device setup cases of the first NAN device to the device receiving the setup signaling. In some embodiments, the second NAN device receives the setup signaling, and the setup signaling is used for transmitting the device setup cases of the first NAN device to the second NAN device.

Illustratively, the target ranging mode is a ranging mode different from the FTM ranging mode. In some embodiments, the target ranging mode is different from the traditional FTM ranging mode and is not specifically limited. In some embodiments, a ranging accuracy of the target ranging mode is higher than a ranging accuracy of the traditional FTM ranging mode. For example, the target ranging mode is an enhanced ranging mode based on the traditional FTM ranging mode, or other ranging mode different from the time-based measurement mode. In some embodiments, the target ranging mode include, but is not limited to the EDCA-based enhanced FTM ranging mode or the non-TB ranging mode. Those of skilled in the art should understand that the description of the target ranging mode is exemplary, and the target ranging mode may include other ranging modes.

In some embodiments of the present disclosure, the setup signaling is used for setting up the target ranging mode from the candidate ranging modes supported by the first NAN device. In some embodiments of the present disclosure, the setup signaling indicates whether the first NAN device supports the HE PHY mode. The above two embodiments is the same as third implementation to sixth implementation. Thus, for detailed description, reference may be made to the above embodiments, which is not described herein any further.

In summary, in the method according to the embodiments of the present disclosure, the information related to the target ranging mode of the first NAN device is indicated by the setup signaling for setting up the ranging session, and the ranging mode different from the traditional FTM ranging mode is used for ranging, such that the target ranging mode supported by the first NAN device is expanded, different requirements on ranging of the NAN device in different scenarios are met, and the ranging accuracy is improved using the target ranging mode.

FIG. 21 is a flowchart of a method for setting up a ranging session for a NAN device according to some embodiments of the present disclosure. The method is applicable to a second NAN device, and includes the following processes.

**In S540,** the second NAN device receives setup signaling for setting up the ranging session.

Illustratively, the setup signaling indicates information related to the target ranging mode of the first NAN device. In some embodiments, the setup signaling is directly used for setting up the target ranging mode of the first NAN device, or indirectly indicates information related to the target ranging mode of the first NAN device, which is not specifically limited in the present disclosure.

Illustratively, the setup signaling further carries the ranging parameter of the target ranging mode for negotiation. The ranging parameter of the target ranging mode includes a ranging parameter of the non-TB ranging mode or a ranging parameter of the EDCA-based enhanced FTM ranging mode.

**In S550,** the second NAN device transmits response setup signaling for setting up the ranging session.

Illustratively, the response setup signaling indicates that the ranging parameter of the target ranging mode received by the second NAN device does not meet a target condition. In some embodiments, the response setup signaling is carried in a ranging response frame.

The response setup signaling includes a Reason Code field. The Reason Code field indicates a reason why the parameter of the EDCA-based enhanced FTM ranging mode or the non-TB ranging mode does not meet the target condition. Specifically, in the case that the Reason Code field takes a first value, the Reason Code field indicates that the parameter of the non-TB ranging mode does not meet a requirement; and/or, in the case that the Reason Code field takes a second value, the Reason Code field indicates that the EDCA-based enhanced FTM ranging mode does not meet a ranging accuracy requirement.

In some embodiments, the response setup signaling is Ranging Setup Attribute, and the Ranging Setup Attribute includes the Reason Code field. The Reason Code field is set to 13 (NTB_PARAMETERS_INCAPABLE) to indicate that a ranging request of an initiator is rejected as the parameter of the non-TB ranging mode does not meet the requirement.

The Reason Code field is set to 14 (RANGING PRECISION_INCAPABLE) to indicate that a ranging session needs to be updated or terminated and the current ranging mode does not meet a service ranging accuracy requirement. Furthermore, in the case that a NAN device first supporting the HE PHY mode and a NAN device second supporting the HE PHY mode in the first NAN cluster ranges, and the ranging accuracy of the EDCA-based enhanced FTM ranging mode does not meet the upper layer application, the NAN device first or second supporting the HE PHY mode transmits a NAN ranging session update or termination frame indication to set the Reason Code field as 14.

In summary, in the method according to the embodiments of the present disclosure, the response setup signaling for setting up the ranging session indicates that the ranging parameter of the target ranging mode received by the second NAN device does not meet the target condition, and the ranging mode different from the traditional FTM ranging mode is used for ranging, such that the target ranging mode supported by the first NAN device is expanded, different requirements on ranging of the NAN device in different scenarios are met, and the ranging accuracy is improved using the target ranging mode.

It should be noted that the description of the first NAN device and the second NAN device in the embodiments of the present disclosure is only exemplary. The first NAN device indicates a transmitter of the capability signaling or the setup signaling, and the second NAN device indicates a receiver of the capability signaling or the setup signaling. Those of skilled in the art may understand that the first NAN device and the second NAN device is any of devices in the NAN network. In some embodiments, the first NAN device is a transmitter of the capability signaling, and the second NAN device is a receiver of the setup signaling. Even though the first NAN device and the second NAN device have different names, the first NAN device and the second NAN device can be the same device or different devices in the embodiments. Similarly, the receiver and the transmitter are usually different for any party device of the capability signaling or the setup signaling. However, the receiver of the capability signaling and any party device of the setup signaling, the receiver of the setup signaling and any device of the capability signaling can be the same or different. Any party device includes any of a receiver or a transmitter.

It can be understood that the above embodiments can be implemented separately or jointly, which is not limited in the present disclosure.

The present disclosure is described further by the following embodiments.

FIG. 22 is a flowchart of a method for starting a ranging mode of a NAN device according to some embodiments of the present disclosure.

Illustratively, the first NAN device transmits a NAN SDF to the second NAN device for subscription or publishment. The NAN SDF includes SDA and Device Capability Attribute (DCA). Similarly, the second NAN device transmits a NAN SDF to the first NAN device for subscription or publishment.

The first NAN device transmits a NAN ranging request frame to the second NAN device, and the second NAN device transmits a NAN ranging response frame to the first NAN device in response to the NAN ranging request frame.

Furthermore, one or more EDCA-based enhanced FTM ranging modes and/or the non-TB ranging modes are performed between the first NAN device and the second NAN device. It should be noted that the ranging mode may be performed once or several times, which is not specifically limited in the embodiments.

The first NAN device transmits a NAN ranging report frame to the second NAN device, and acts as an initiator to report, using the ranging report frame, a ranging result of a current measurement instance to the second NAN device being a responder.

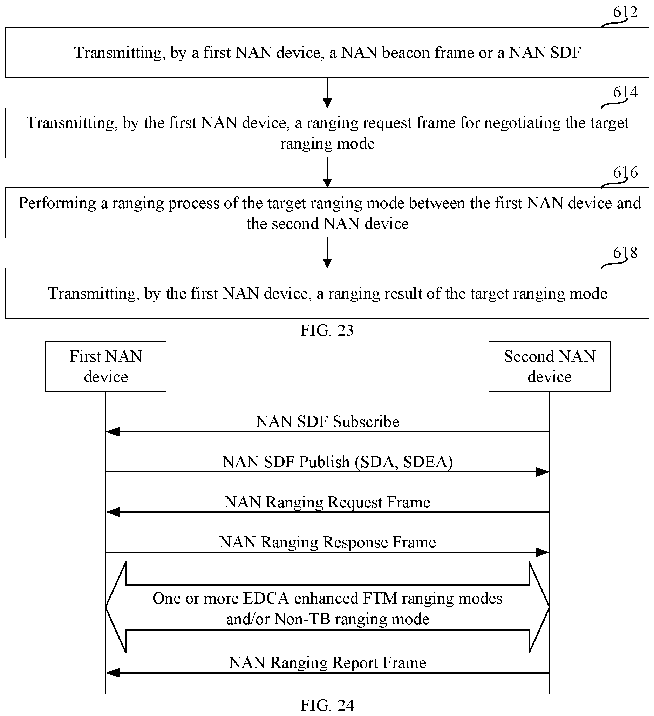

FIG. 23 is a flowchart of a method for starting a ranging mode of a NAN device according to some embodiments of the present disclosure. The method is applicable to a first NAN device, and includes the following processes.

**In S612,** the first NAN device transmits a NAN beacon frame or a NAN SDF.

Any two NAN devices supporting the HE PHY mode in the same NAN cluster may indicate, via a NAN ranging capability exchange phase, that the devices support the HE PHY mode. The embodiments are described using an example where the first NAN device transmits the NAN beacon frame or the NAN SDF.

### The NAN SDF is first described.

A service or application of a first NAN device supporting the HE PHY mode indicates a subscription or publishment service by invoking a subscription or publishment method of a NAN MAC or a NAN engine in the device. After the NAN MAC or the NAN engine in the first NAN device supporting the HE PHY mode receives the subscription or publishment method, the NAN MAC or the NAN engine generates and transmits a NAN SDF within the DW. The NAN SDF carries Service Descriptor Attribute and Device Capability Attribute. The NAN SDF further carries Ranging Information Attribute, Ranging Attribute, and the like.

The Service Descriptor Attribute describes a type of the service, a filter, detailed information of the service, and the like. Illustratively, in the case that values of bit 0 and bit 1 in the Service Descriptor Attribute are "00," the service is a Publish type; or, in the case that values of bit 0 and bit 1 in the Service Descriptor Attribute are "01", the service is a subscribe type.

The Device Capability Attribute describes DW information committed by the device, a support frequence band, a PHY mode, the number of antennas, and other information. The PHY Mode information in the Operation Mode field in the NAN device supporting the HE PHY mode takes a value of 1 and the Extended PHY Mode information takes a value of 1, to indicate the device supports the HE PHY mode. First bandwidth indication information and/or second bandwidth indication information takes a value of 1 to indicate that the device supports the 80+80 MHz bandwidth mode and/or the 160 MHz bandwidth mode. Illustratively, for detailed description of the Device Capability Attribute, reference may be made to third implementation in the above embodiments, which is not repeated in the embodiments.

The Ranging Information Attribute indicates whether the local coordinates of the LCI of are available, whether the geospatial LCI is available, and whether the civic location information is available, and indicates a last movement. The first NAN device indicates, based on first indication information and second indication information, whether the first NAN device supports the target ranging mode, and indicates, based on first indication information, second indication information, and third indication information, whether the first NAN device supports the target ranging mode. Illustratively, for detailed description of the Ranging Information Attribute, reference may be made to first implementation in the above embodiments, which is not repeated in the embodiments.

Similarly, a service or application of a second NAN device supporting the HE PHY mode indicates a subscription or publishment service by invoking a subscription or publishment method of a NAN MAC or a NAN engine in the device. After the NAN MAC or the NAN engine in the second NAN device supporting the HE PHY mode receives the subscription or publishment method, the NAN MAC or the NAN engine generates and transmits a NAN SDF within the DW.

The NAN beacon frame is then described.

Illustratively, the first NAN device carries an attribute related to the NAN ranging over a NAN beacon frame, including a NAN discovery beacon frame and a NAN sync beacon frame.

Those of skilled in the art can understand that the NAN incudes at least three types of devices: a master device, a non-master sync device, and a non-master non-sync device. Indications of support of the EDCA-based enhanced FTM ranging mode or the non-TB ranging mode by the three devices are described as follows.

### • The master device and the non-master sync device

The master device and the non-master sync device in the NAN transmit the sync beacon frame within the DW, and alternatively carry the Device Capability Attribute and/or Ranging Information Attribute in the sync beacon frame to indicate information related to the ranging mode supported by the NAN device.

Specifically, the PHY Mode information in the Operation Mode field in the NAN device supporting the HE PHY mode takes a value of 1 and the Extended PHY Mode information takes a value of 1, to indicate the device supports the HE PHY mode. The first bandwidth indication information and/or the second bandwidth indication information takes a value of 1, to indicate that the device supports the 80+80 MHz bandwidth mode and/or the 160 MHz bandwidth mode. Illustratively, for detailed description of the Device Capability Attribute, reference may be made to third implementation in the above embodiments, which is not repeated in the embodiments.

The Ranging Information Attribute indicates whether the coordinates of the LCI location of are available, whether the geographic LCI is available, and whether the citizen location information is available, and indicates a last movement. Illustratively, for detailed description of the Ranging Information Attribute, reference may be made to first implementation in the above embodiments, which is not repeated in the embodiments.

### • The master device

The master device transmits the discovery beacon frame beyond the DW, and alternatively carry the Device Capability Attribute and/or Ranging Information Attribute in the discovery beacon frame to indicate information related to the ranging mode supported by the NAN device.

Specifically, the PHY Mode information in the Operation Mode field in the NAN device supporting the HE PHY mode takes a value of 1 and the Extended PHY Mode information takes a value of 1, to indicate the device supports the HE PHY mode. The first bandwidth indication information and/or the second bandwidth indication information takes a value of 1 to indicate that the device supports the 80+80 MHz bandwidth mode and/or the 160 MHz bandwidth mode. Illustratively, for detailed description of the Device Capability Attribute, reference may be made to third implementation in the above embodiments, which is not repeated in the embodiments.

The Ranging Information Attribute indicates whether the coordinates of the LCI location of are available, whether the geographic LCI is available, and whether the citizen location information is available, and indicates a last movement. Illustratively, for detailed description of the Ranging Information Attribute, reference may be made to first implementation in the above embodiments, which is not repeated in the embodiments.

**In S614,** the first NAN device transmits a ranging request frame for negotiating the target ranging mode.

The first NAN device determines to initiate a NAN ranging session start process. A device starting the NAN ranging session is referred to as a NAN ranging initiator, and a device responding to the NAN ranging session is referred to as a NAN ranging responder. Illustratively, the NAN ranging initiator is the first NAN device, and the NAN ranging responder is the second NAN device.

The NAN device starts a ranging session negotiation process with the peer device by transmitting a NAN ranging request frame to the peer device. In the NAN ranging session start process, the two NAN devices need to negotiate corresponding ranging parameters based on the ranging mode. The ranging mode includes, but is not limited to, the traditional FTM ranging mode, the EDCA-based enhanced FTM ranging mode, or the non-TB ranging mode.

The embodiments are described using an example where the ranging initiator and the ranging responder all devices supporting the HE PHY mode.

Two NAN devices supporting the HE PHY mode in the same NAN cluster supports the EDCA-based enhanced FTM ranging mode or the non-TB ranging mode. In some practices, two NAN devices supporting the HE PHY mode in the same NAN cluster perform the FTM ranging method. The embodiments only describe processes of performing the EDCA-based enhanced FTM ranging mode and the non-TB ranging mode.

A control module of a ranging engineer in the NAN device (the first NAN device) first supporting the HE PHY mode in the first NAN cluster determines, based on capability information of the NAN device (the second NAN device) second supporting the HE PHY mode in the first NAN cluster, a last movement indication, and the FAW information, whether to initiate the NAN ranging session to the NAN device second supporting the HE PHY mode in the first NAN cluster and determines to transmit the ranging mode required to be negotiated in transmitting the first NAN ranging request frame.

Time for transmitting the ranging request frame is within the DW or the FAW of the NAN device second supporting the HE PHY mode in the ranging capability exchange phase. The NAN ranging request frame includes the Ranging Setup Attribute, the Ranging Information Attribute, the NAN Availability Attribute, and the Device Capability Attribute.

The Non-TB Parameter Present information in the Ranging Control field in the Ranging Setup Attribute takes a value of 1 to indicate the NAN non-TB ranging mode, and Ranging Setup Attribute carries the parameter supporting the NAN non-TB ranging mode.

The NAN FTM Parameter Present information in the Ranging Setup Attribute takes a value of 1, the NAN FTM parameters field carries the parameter of the EDCA-based enhanced FTM ranging mode, and the first NAN device explicitly or implicitly indicates the EDCA-based enhanced FTM ranging mode. Illustratively, for detailed description of the Ranging Setup Attribute, reference may be made to fourth implementation and fifth implementation in the above embodiments, which is not repeated in the embodiments.

Specifically, the PHY Mode information in the Operation Mode field in the NAN device supporting the HE PHY mode takes a value of 1 and the Extended PHY Mode information takes a value of 1, to indicate that the device supports the HE PHY mode. The first bandwidth indication information and/or the second bandwidth indication information takes a value of 1 to indicate that the device supports the 80+80 MHz bandwidth mode and/or the 160 MHz bandwidth mode. Illustratively, for detailed description of the Device Capability Attribute, reference may be made to third implementation in the above embodiments, which is not repeated in the embodiments.

The Ranging Information Attribute indicates whether the coordinates of the LCI location of are available, whether the geographic LCI is available, and whether the citizen location information is available, and indicates a last movement. Illustratively, for detailed description of the Ranging Information Attribute, reference may be made to first implementation in the above embodiments, which is not repeated in the embodiments.

The NAN Availability Attribute carries the potential FAW, the conditional FAW, and the committed FAW for performing the non-TB ranging mode.

After the NAN device second supporting the HE PHY mode in the first NAN cluster receives the ranging request frame of the NAN device first supporting the HE PHY mode in the first NAN cluster, the control module of the ranging engineer in the NAN device second supporting the HE PHY mode in the first NAN cluster determines to accept or reject the ranging request based on the ranging parameter in the ranging request frame.

In the case that the ranging parameter and NAN scheduling resources in the ranging request frame of the NAN device first supporting the HE PHY mode in the first NAN cluster meet the ranging requirement, the NAN device second supporting the HE PHY mode in the first NAN cluster transmits a ranging response frame to the NAN device first supporting the HE PHY mode in the first NAN cluster. The ranging response frame carries the Ranging Setup Attribute, the Ranging Information Attribute, the NAN Availability Attribute, and the Device Capability Attribute. For description of the Ranging Setup Attribute, the Ranging Information Attribute, the NAN Availability Attribute, and the Device Capability Attribute, reference may be made to the description of the ranging request frame in the above embodiments, which is not described herein any further.

In the case that the ranging parameter and the NAN scheduling resources in the ranging request frame of the NAN device first supporting the HE PHY mode in the first NAN cluster do not meet the requirement, the NAN device second supporting the HE PHY mode in the first NAN cluster transmits a ranging response frame to the NAN device first supporting the HE PHY mode in the first NAN cluster. The ranging response frame carries the Ranging Setup Attribute and the r Ranging Information Attribute, and alternatively carries the NAN Availability Attribute and the Device Capability Attribute.

Specifically, a Status sub-field in the Ranging Setup Attribute is set to 1 to represent a rejection. As the non-TB ranging parameter in the ranging request frame of the NAN device first supporting the HE PHY mode in the first NAN cluster does not meet the requirement, the Reason Code field is set to 13 (NTB_PARAMETERS_INCAPABLE) to represent a rejection as the non-TB ranging parameter mode does not meet the requirement.

The Reason Code field is set to 12 (RANGING_SCHEDULE_UNACCEPTABLE) due to the resource scheduling reason first supporting the HE PHY mode in the first NAN cluster, and the Reason Code field is set to 2 (RESOURCE_LIMITATION) or other modes due to any FAW not in the ranging request frame.

### NAN ranging session update

The NAN ranging initiator transmits a NAN ranging request frame to the responder to start the ranging session update.

The NAN ranging responder requests update of the ranging session by transmitting the scheduling update NAF including the potential FAW, the conditional FAW, and the committed FAW. The NAN ranging initiator determines, after receiving the scheduling update NAF, whether to start the ranging session update. The NAN ranging session update process is the same as the NAN ranging session start process.

### NAN ranging session termination

In the NAN ranging session process, the ranging initiator and the ranging responder both can terminate the ranging session by transmitting the ranging termination frame to the peer device. In the case that ranging session is terminated, corresponding committed resource blocks in the ranging session should be released. The ranging termination frame carries the Ranging Setup Attribute, and alternatively carries the Ranging Information Attribute, the NAN Availability Attribute, and the Unaligned Schedule Attribute. The Type sub-field in the Type and Status field in the Ranging Setup Attribute is set to 2 (termination), b0, b1, b2, b3, and b4 in the Ranging Control field are set to 0 but does not include the FTM ranging parameter, the NAN non-TB ranging parameter, and the Ranging Schedule Attribute List field.

**In S616,** a ranging process in the target ranging mode is performed between the first NAN device and the second NAN device.

After the NAN ranging negotiation, the ranging initiator and the ranging responder successfully establish a ranging schedule table, that is, the ranging schedule table is successfully established between the first NAN device and the second NAN device.

One or more CRBs are included, the ranging initiator transmits an IFTMR to the ranging responder to initiate the ranging request in each scheduled ranging CRB and carries different parameters based on different ranging modes, and the ranging responder transmits an IFTM frame to respond to the ranging request of the ranging initiator. Then, the ranging responder and the ranging initiator perform one or more measurement instances based on the negotiated ranging mode.

**In S618,** the first NAN device transmits a ranging result in the target ranging mode.

After the ranging responder indicates to require the ranging result in the ranging negotiation phase and performs each FTM or non-TB measurement instance, the initiator reports the ranging result of the current measurement instance to the responder over the ranging report frame. That is, the first NAN device transmits the ranging result of the target ranging mode.

In summary, in the method according to the embodiments of the present disclosure, whether the first NAN device supports the related capability of the target ranging mode is indicated by the capability signaling for exchanging the device capability, and the device capability is exchanged using the ranging mode different from the traditional FTM ranging mode; the information related to the target ranging mode of the first NAN device is indicated by the setup signaling for setting up the ranging session, and the ranging mode different from the traditional FTM ranging mode is used for ranging, such that the target ranging mode supported by the first NAN device is expanded, different requirements on ranging of the NAN device in different scenarios are met, and the ranging accuracy is improved using the target ranging mode.

Illustratively, for the NAN ranging session start phase, the ranging initiator is a NAN device supporting the HE PHY mode, or the ranging responder is a NAN device supporting the HE PHY mode.

In the case that the ranging initiator is the NAN device supporting the HE PHY mode, the ranging mode meeting the capability of the peer device is initiated based on the capability information of the peer device. For example, in the case that the peer device is a HT NAN device, the ranging initiator initiates the ranging session start phase of the HT format and bandwidth based traditional FTM ranging mode; in the case that the peer device is a VHT NAN device, the ranging initiator initiates the ranging session start phase of the HT or VHT format and bandwidth based FTM ranging request; and in the case that the peer device supports the HE PHY mode, the ranging initiator initiates the existing FTM ranging, the EDCA-based enhanced FTM ranging mode, or the non-TB ranging mode.

In the case that the peer device is a device supporting the HE PHY mode, the ranging responder determines whether to accept based on the capability information of the peer device and the initiated ranging request, which includes two cases, for example:
the ranging initiator is a HT NAN device or a VHT NAN device, the ranging responder is a NAN device supporting the HE PHY mode, the traditional FTM ranging mode is used; and
the ranging initiator is a NAN device supporting the HE PHY mode, the ranging responder is a NAN device supporting the HE PHY mode, the traditional FTM ranging mode, the EDCA-based enhanced FTM ranging mode, or the non-TB ranging mode is used.

In the case that the ranging initiator is an HT NAN device or a VHT NAN device, the device determines the ranging responder supporting the HE PHY mode as an HT NAN device or a VHT NAN device, which is described in the above embodiments and is not repeated herein.

FIG. 24 is a flowchart of a method for starting a ranging mode of a NAN device according to some embodiments of the present disclosure.

Illustratively, the second NAN device transmits a NAN SDF to the first NAN device for subscription, and the first NAN device transmits the NAN SDF to the second NAN device for publishment. The NAN SDF includes SDA and Service Descriptor Extension Attribute (SDEA).

The second NAN device transmits a NAN ranging request frame to the first NAN device, and the first NAN device transmits a NAN ranging response frame to the second NAN device in response to the NAN ranging request frame.

Furthermore, one or more EDCA-based enhanced FTM ranging modes and/or the non-TB ranging modes are performed between the first NAN device and the second NAN device. It should be noted that the ranging mode may be performed once or several times, which is not specifically limited in the embodiments.

The second NAN device transmits a NAN ranging report frame to the first NAN device, and the first NAN device acts as an initiator to report, using the ranging report frame, a ranging result of a current measurement instance to the second NAN device being a responder.

FIG. 23 is a flowchart of a method for starting a ranging mode of a NAN device according to some embodiments of the present disclosure. The method is applicable to a first NAN device and a second NAN device, and includes the following processes.

**In S662,** the first NAN device transmits a NAN SDF to indicate a target ranging mode used by the first NAN service.

A service or application of a NAN device (the first NAN device) first supporting the HE PHY mode in the first NAN cluster invokes the subscription method and indicates a service required to be subscribed, a subscription type, configuration parameters, and the like. In some embodiments, the subscription type includes passive subscription and active subscription. In the case that the subscription type is the active subscription, the NAN MAC or the NAN engineer transmits a NAN SDF within the DW. In the case that values of bit 0 and bit 1 in the Service Control field in the Service Descriptor Attribute are "01", the service is the subscribe type.

The NAN SDF carries the Service Descriptor Attribute, and alternatively carries the Device Capability Attribute.

Specifically, the PHY mode in the Operation Mode field in the NAN device supporting the HE PHY mode takes a value of 1 and the Extended PHY Mode information takes a value of 1, to indicate the device supports the HE PHY mode. The first bandwidth indication information and/or the second bandwidth indication information takes a value of 1 to indicate that the device supports the 80+80 MHz bandwidth mode and/or the 160 MHz bandwidth mode. Illustratively, for detailed description of the Device Capability Attribute, reference may be made to third implementation in the above embodiments, which is not repeated in the embodiments.

A service or application of a NAN device second supporting the HE PHY mode in the first NAN cluster invokes the publishment method and indicates a service required to be published, an advertisement type, configuration parameters, ranging configuration parameters, and the like. In some embodiments, the advertisement type includes unsolicited transmissions only, solicited transmissions only, and solicited and unsolicited transmissions.

In the case that the advertisement type is the unsolicited transmissions only, the NAN device generates and transmits a NAN SDF within the DW. In the case that values of bit 0 and bit 1 in the Service Descriptor Attribute are "00," the service is a Publish type.

In the case that the advertisement type is the solicited transmissions only, the NAN device generates, after receiving a subscription message meeting the requirement, and transmits a NAN SDF within the DW. In the case that values of bit 0 and bit 1 in the Service Descriptor Attribute are "00," the service is a Publish type.

In the case that the advertisement type is the solicited and unsolicited transmissions, the NAN device responds to a received peer subscription message by a publish message, and actively transmits a publish message in the case of not receiving the subscription message.

The NAN SDF carries the Service Descriptor Attribute, the Service Descriptor Extension Attribute, the Device Capability Attribute, and the Ranging Information Attribute, and alternatively carries the Ranging Attribute.

The Service Descriptor Extension Attribute describes additional information of the service.

In the case that the Ranging with Specific Type information takes a binary value of "01," the service needs the non-TB ranging mode; in the case that the Ranging with Specific Type information takes a binary value of "10," the service needs the EDCA-based enhanced FTM ranging mode; or, in the case that the Ranging with Specific Type information takes a binary value of "00," the service needs the traditional FTM ranging mode. Illustratively, for detailed description of the Ranging with Specific Type information, reference may be made to second implementation in the above embodiments, which is not repeated in the embodiments.

The Ranging Information Attribute indicates whether the coordinates of the LCI location of are available, whether the geographic LCI is available, and whether the citizen location information is available, and indicates a last movement. Illustratively, for detailed description of the Ranging Information Attribute, reference may be made to first implementation in the above embodiments, which is not repeated in the embodiments.

Specifically, the PHY mode in the Operation Mode field in the NAN device supporting the HE PHY mode takes a value of 1 and the value of Extended PHY Mode information takes a value of 1, to indicate the device supports the HE PHY mode. The first bandwidth indication information and/or the second bandwidth indication information takes a value of 1 to indicate that the device supports the 80+80 MHz bandwidth mode and/or the 160 MHz bandwidth mode. Illustratively, for detailed description of the Device Capability Attribute, reference may be made to third implementation in the above embodiments, which is not repeated in the embodiments.

The NAN device first supporting the HE PHY mode and second supporting the HE PHY mode in the first NAN cluster alternatively by the NAN SDF. In the case that bit 0 and bit 1 in the Service Descriptor Attribute are set to "01," the service is the subscribe type. In the case that bit 0 and bit 1 in the Service Control field in the Service Descriptor Attribute are set to "10," the service is a follow-up type. The NAN SDF alternatively carries the Service Descriptor Extension Attribute, the Device Capability Attribute, the Ranging Information Attribute, and the like.

**In S664,** the second NAN device transmits a ranging request frame for negotiating the target ranging mode.

In the case that the NAN device in the same NAN cluster needs a subscription service, the ranging needs to finished with the service publisher.

Using an example where the service subscriber is the HE NAN device, the service subscriber acts as a NAN ranging initiator (the second NAN device) to perform the ranging session start process in the following procedure.

In the ranging session process of invoking the NAN ranging by the service discovery process, the service subscriber acts as the NAN ranging initiator, and the service publisher acts as the NAN ranging responder. The NAN ranging initiator starts the ranging session to the service publisher based on the ranging type for indication in the SDEA in the NAN SDF received in the NAN ranging capability exchange process. In the case that the Ranging with Specific Type information takes a binary value of "01," the service needs the non-TB ranging mode; in the case that the Ranging with Specific Type information takes a binary value of "10," the service needs the EDCA-based enhanced FTM ranging mode; or, in the case that the Ranging with Specific Type information takes a binary value of "00," the service needs the traditional FTM ranging mode. Illustratively, for detailed description of the Ranging with Specific Type information, reference may be made to second implementation in the above embodiments, which is not repeated in the embodiments.

A control module of the service subscriber determines, based on capability information of the NAN device first supporting the HE PHY mode in the first NAN cluster, a last movement indication, and the FAW information, whether to initiate the NAN ranging session to the publisher and determines to transmit the ranging mode required to be designated in transmitting the first NAN ranging request frame. Time for transmitting the first ranging request frame is within the DW or the FAW of the NAN device second supporting the HE PHY mode in the ranging capability exchange phase. The first NAN ranging request frame includes the Ranging Setup Attribute, the Ranging Information Attribute, the NAN Availability Attribute, and the Device Capability Attribute.

The NAN FTM Parameter Present information in the Ranging Setup Attribute takes a value of 1, the NAN FTM parameters field carries the parameter of the EDCA-based enhanced FTM ranging mode, and the first NAN device explicitly or implicitly indicates the EDCA-based enhanced FTM ranging mode. Illustratively, for detailed description of the Ranging Setup Attribute, reference may be made to fourth implementation and fifth implementation in the above embodiments, which is not repeated in the embodiments.

Specifically, the PHY Mode information in the Operation Mode field in the NAN device supporting the HE PHY mode takes a value of 1 and the Extended PHY Mode information takes a value of 1, to indicate that the device supports the HE PHY mode. The first bandwidth indication information and/or the second bandwidth indication information takes a value of 1 to indicate that the device supports the 80+80 MHz bandwidth mode and/or the 160 MHz bandwidth mode. Illustratively, for detailed description of the Device Capability Attribute, reference may be made to third implementation in the above embodiments, which is not repeated in the embodiments.

The Ranging Information Attribute indicates whether the coordinates of the LCI location of are available, whether the geographic LCI is available, and whether the citizen location information is available, and indicates a last movement. Illustratively, for detailed description of the Ranging Information Attribute, reference may be made to first implementation in the above embodiments, which is not repeated in the embodiments.

The NAN Availability Attribute carries the potential FAW, the conditional FAW, and the committed FAW for performing the non-TB ranging mode.

After the service publisher receives the first ranging request frame of the service subscriber, a control module in a ranging engineer of the service subscriber determines to accept or reject the ranging request based on the ranging parameter in the ranging request frame.

In the case that the ranging parameter and NAN scheduling resources in the ranging request frame of the service subscriber meet the ranging requirement in, the service publisher transmits a ranging response frame to the service subscriber. The ranging response frame carries the Ranging Setup Attribute, the Ranging Information Attribute, the NAN Availability Attribute, and the Device Capability Attribute. For description of the Ranging Setup Attribute, the Ranging Information Attribute, the NAN Availability Attribute, and the Device Capability Attribute, reference may be made to the description of the ranging request frame in the above embodiments, which is not described herein any further.

In the case that the ranging parameter and the NAN scheduling resources in the ranging request frame of the service subscriber do not meet the requirement, the service publisher transmits a ranging response frame to the service subscriber in the first NAN cluster. The ranging response frame carries the Ranging Setup Attribute and the Ranging Information Attribute, and alternatively carries the NAN Availability Attribute and the Device Capability Attribute.

Specifically, a Status sub-field in the Ranging Setup Attribute is set to 1 to represent a rejection. As the non-TB ranging parameter in the ranging request frame of the NAN device first supporting the HE PHY mode in the first NAN cluster does not meet the requirement, the Reason Code field is set to 13 (NTB_PARAMETERS_INCAPABLE) to represent a rejection as the non-TB ranging parameter does not meet the requirement.

The Reason Code field is set to 12 (RANGING_SCHEDULE_UNACCEPTABLE) due to the resource scheduling reason first supporting the HE PHY mode in the first NAN cluster, and the Reason Code field is set to 2 (RESOURCE_LIMITATION) or other modes due to any FAW not in the ranging request frame.

### NAN ranging session update

The NAN ranging initiator transmits a NAN ranging request frame to the responder to start the ranging session update.

The NAN ranging responder requests update of the ranging session by transmitting the scheduling update NAF including the potential FAW, the conditional FAW, and the committed FAW. The NAN ranging initiator determines, after receiving the scheduling update NAF, whether to start the ranging session update. The NAN ranging session update process is the same as the NAN ranging session start process.

### NAN ranging session termination

In the NAN ranging session process, the ranging initiator and the ranging responder both can terminate the ranging session by transmitting the ranging termination frame to the peer device. In the case that ranging session is terminated, corresponding committed resource blocks in the ranging session should be released. The ranging termination frame carries the Ranging Setup Attribute, and alternatively carries the Ranging Information Attribute, the NAN Availability Attribute, and the Unaligned Schedule Attribute. The Type sub-field in the Type and Status field in the Ranging Setup Attribute is set to 2 (termination), b0, b1, b2, b3, and b4 in the Ranging Control field are set to 0 but does not include the FTM ranging parameter, the NAN non-TB ranging parameter, and the Ranging Schedule Attribute List field.

**In S666,** a ranging process in the target ranging mode is performed between the first NAN device and the second NAN device.

After the NAN ranging negotiation, the ranging initiator and the ranging responder successfully establish a ranging schedule table, that is, the ranging schedule table is successfully established between the first NAN device and the second NAN device.

One or more CRBs are included, the ranging initiator transmits an IFTMR to the ranging responder to initiate the ranging request in each scheduled ranging CRB and carries different parameters based on different ranging modes, and the ranging responder transmits an IFTM frame to respond to the ranging request of the ranging initiator. Then, the ranging responder and the ranging initiator perform one or more measurement instances based on the negotiated ranging mode.

**In S668,** the second NAN device transmits a ranging result in the target ranging mode.

After the ranging responder needs the ranging result in the ranging negotiation phase and performs each FTM or non-TB measurement instance, the initiator reports the ranging result of the current measurement instance to the responder over the ranging report frame. That is, the second NAN device transmits the ranging result in the target ranging mode.

In summary, in the method according to the embodiments of the present disclosure, whether the first NAN device supports the related capability of the target ranging mode is indicated by the capability signaling for exchanging the device capability, and the device capability is exchanged using the ranging mode different from the traditional FTM ranging mode; the information related to the target ranging mode of the first NAN device is indicated by the setup signaling for setting up the ranging session, and the ranging mode different from the traditional FTM ranging mode is used for ranging, such that the target ranging mode supported by the first NAN device is expanded, different requirements on ranging of the NAN device in different scenarios are met, and the ranging accuracy is improved using the target ranging mode.

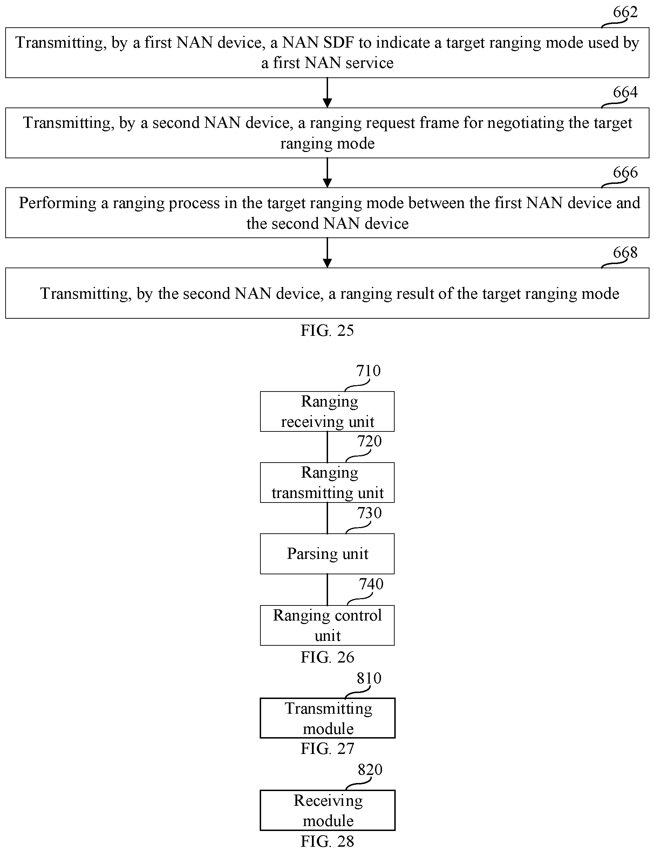

FIG. 26 is a structural block diagram of a NAN ranging engine according to some embodiments of the present disclosure.

The NAN ranging engine includes a ranging receiving unit 710, a ranging transmitting unit 720, a parsing unit 730, and a ranging control unit 740.

The ranging receiving unit 710 is configured to receive and cache a NAN ranging request frame, a NAN ranging response frame, a NAN ranging termination frame, a NAN ranging update frame, and other frames related to the NAN ranging process, for example, an IFTMR frame, an IFTM frame, an FTM, and the like.

The ranging transmitting unit 720 is configured to cache and transmit the NAN ranging request frame, the NAN ranging response frame, the NAN ranging termination frame, the NAN ranging update frame, and other frames related to the NAN ranging process, for example, the IFTMR frame, the IFTM frame, the FTM, and the like.

The parsing unit 730 is configured to parse ranging information of the NAN ranging request frame, the NAN ranging response frame, the NAN ranging termination frame, the NAN ranging update frame, and other frames related to the NAN ranging process, for example, the IFTMR frame, the IFTM frame, the FTM, and the like, and report the result to the ranging control unit 740.

The ranging control unit 740 is configured for the control logic of the ranging operation process. In the ranging session start process, a ranging session meeting the requirement should be started based on the requirement of the NAN service or application and the device capability when initiated by the NAN service, and a specific ranging session should be started based on the service requirement NAN when initiated by the NAN discovery engine. In the NAN ranging session negotiation phase, whether the requirement of the service/application is met should be determined based on the parameter to determine to accept or terminate the session. In the NAN ranging reporting phase, the final ranging result is calculated based on the ranging data, the result is fed back to the NAN application/service or the NAN discovery engine, and whether to generate and transmit the NAN ranging result to the peer device is determined based on whether the ranging result needs to be reported to the peer device in the NAN ranging negotiation phase.

The apparatus embodiments of the present disclosure are described hereinafter, which are applicable to the method embodiments of the present disclosure. For details not disclosed in the apparatus embodiments of the present disclosure, reference may be made to the method embodiments of the present disclosure.

FIG. 27 is a block diagram of an apparatus for exchanging a device capability of a NAN device according to some embodiments of the present disclosure. The apparatus includes a transmitting module 810.

The transmitting module 810 is configured to transmit capability signaling for exchanging the device capability, wherein the capability signaling indicates whether a first NAN device supports a related capability of a target ranging mode, wherein the target ranging mode includes at least one of an enhanced FTM ranging mode based on an EDCA or a non-TB ranging mode.

In some embodiments, the capability signaling indicates whether the first NAN device supports the target ranging mode.

In some embodiments, the capability signaling includes a Ranging Protocol Indication field, wherein the Ranging Protocol Indication field indicates whether the first NAN device supports the target ranging mode, and the target ranging mode includes the enhanced FTM ranging mode based on an EDCA and/or the non-TB ranging mode.

In some embodiments, the Ranging Protocol Indication field includes first indication information and second indication information, wherein the first indication information indicates whether the first NAN device supports the EDCA-based enhanced FTM ranging mode, and/or the second indication information indicates whether the first NAN device supports the non-TB ranging mode.

In some embodiments, the Ranging Protocol Indication field further includes third indication information, wherein the third indication information indicates whether the first NAN device supports a traditional FTM ranging mode.

In some embodiments, the capability signaling is carried in a NAN beacon frame or a NAN SDF.

In some embodiments, the capability signaling indicates a target ranging mode used by a service of the first NAN device.

In some embodiments, the capability signaling includes Ranging with Specific Type information; wherein in a case that the Ranging with Specific Type information takes a first value, the capability signaling indicates that the target ranging mode used by the service of the first NAN device is the EDCA-based enhanced FTM ranging mode; and/or in a case that the Ranging with Specific Type information takes a second value, the capability signaling indicates that the target ranging mode used by the service of the first NAN device is the non-TB ranging mode.

In some embodiments, in a case that the Ranging with Specific Type information takes a third value, the capability signaling indicates that the target ranging mode used by the service of the first NAN device is a traditional FTM ranging mode.

In some embodiments, the capability signaling is carried in a NAN SDF.

In some embodiments, the capability signaling further indicates whether the first NAN device supports an HE PHY mode.

In some embodiments, the capability signaling includes Extended PHY Mode information; wherein in a case that the Extended PHY Mode information takes a first value, the capability signaling indicates that the first NAN device supports the HE PHY mode; and/or in a case that the Extended PHY Mode information takes a second value, the capability signaling indicates that the first NAN device does not support the HE PHY mode.

In some embodiments, the capability signaling further indicates support of a channel bandwidth mode of the first NAN device.

In some embodiments, the capability signaling further includes at least one of first bandwidth indication information or second bandwidth indication information; wherein in a case that the Extended PHY Mode information takes the first value, and the first bandwidth indication information takes a third value, the capability signaling indicates that the first NAN device supports the HE PHY mode and a first bandwidth; and/or in a case that the Extended PHY Mode information takes the first value, and the first bandwidth indication information takes a fourth value, the capability signaling indicates that the first NAN device supports the HE PHY mode but does not support a first bandwidth; and/or in a case that the Extended PHY Mode information takes the first value, and the second bandwidth indication information takes a fifth value, the capability signaling indicates that the first NAN device supports the HE PHY mode and a second bandwidth; and/or in a case that the Extended PHY Mode information takes the first value, and the second bandwidth indication information takes a sixth value, the capability signaling indicates that the first NAN device supports the HE PHY mode but does not support a second bandwidth.

In some embodiments, the Extended PHY Mode information is carried in an Operation Mode field in the capability signaling, wherein the Operation Mode field further carries at least one of the first bandwidth indication information or the second bandwidth indication information.

In some embodiments, the capability signaling is carried in a NAN beacon frame or a NAN SDF.

FIG. 28 is a block diagram of an apparatus for exchanging a device capability of a NAN device according to some embodiments of the present disclosure. The apparatus includes a receiving module 820.

The receiving module 820 is configured to receive capability signaling for exchanging the device capability, wherein the capability signaling indicates whether a first NAN device supports a related capability of a target ranging mode, wherein the first NAN device transmits the capability signaling, and the target ranging mode includes at least one of an EDCA-based enhanced FTM ranging mode or a non-TB ranging mode.

In some embodiments, the capability signaling indicates whether the first NAN device supports the target ranging mode.

In some embodiments, the capability signaling includes a Ranging Protocol Indication field, wherein the Ranging Protocol Indication field indicates whether the first NAN device supports the target ranging mode, and the target ranging mode includes the enhanced FTM ranging mode based on an EDCA and/or the non-TB ranging mode.

In some embodiments, the Ranging Protocol Indication field includes first indication information and second indication information, wherein the first indication information indicates whether the first NAN device supports the EDCA-based enhanced FTM ranging mode, and/or the second indication information indicates whether the first NAN device supports the non-TB ranging mode.

In some embodiments, the Ranging Protocol Indication field further includes third indication information, wherein the third indication information indicates whether the first NAN device supports a traditional FTM ranging mode.

In some embodiments, the capability signaling is carried in a NAN beacon frame or a NAN SDF.

In some embodiments, the capability signaling indicates a target ranging mode used by a service of the first NAN device.

In some embodiments, the capability signaling includes Ranging with Specific Type information; wherein in a case that the Ranging with Specific Type information takes a first value, the capability signaling indicates that the target ranging mode used by the service of the first NAN device is the EDCA-based enhanced FTM ranging mode; and/or in a case that the Ranging with Specific Type information takes a second value, the capability signaling indicates that the target ranging mode used by the service of the first NAN device is the non-TB ranging mode.

In some embodiments, in a case that the Ranging with Specific Type information takes a third value, the capability signaling indicates that the target ranging mode used by the service of the first NAN device is a traditional FTM ranging mode.

In some embodiments, the capability signaling is carried in a NAN SDF.

In some embodiments, the capability signaling further indicates whether the first NAN device supports an HE PHY mode.

In some embodiments, the capability signaling includes Extended PHY Mode information; wherein in a case that the Extended PHY Mode information takes a first value, the capability signaling indicates that the first NAN device supports the HE PHY mode; and/or in a case that the Extended PHY Mode information takes a second value, the capability signaling indicates that the first NAN device does not support the HE PHY mode.

In some embodiments, the capability signaling further indicates support of a channel bandwidth mode of the first NAN device.

In some embodiments, the capability signaling further includes at least one of first bandwidth indication information or second bandwidth indication information; wherein in a case that the Extended PHY Mode information takes the first value, and the first bandwidth indication information takes a third value, the capability signaling indicates that the first NAN device supports the HE PHY mode and a first bandwidth; and/or in a case that the Extended PHY Mode information takes the first value, and the first bandwidth indication information takes a fourth value, the capability signaling indicates that the first NAN device supports the HE PHY mode but does not support a first bandwidth; and/or in a case that the Extended PHY Mode information takes the first value, and the second bandwidth indication information takes a fifth value, the capability signaling indicates that the first NAN device supports the HE PHY mode and a second bandwidth; and/or in a case that the Extended PHY Mode information takes the first value, and the second bandwidth indication information takes a sixth value, the capability signaling indicates that the first NAN device supports the HE PHY mode but does not support a second bandwidth.

In some embodiments, the Extended PHY Mode information is carried in an Operation Mode field in the capability signaling, wherein the Operation Mode field further carries at least one of the first bandwidth indication information or the second bandwidth indication information.

In some embodiments, the capability signaling is carried in a NAN beacon frame or a NAN SDF.

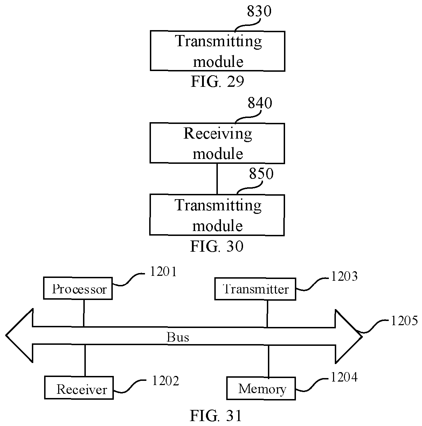

FIG. 29 is a block diagram of an apparatus for setting up a ranging session for a NAN device according to some embodiments of the present disclosure. The apparatus includes a transmitting module 830.

The transmitting module 830 is configured to transmit setup signaling for setting up the ranging session, wherein the setup signaling indicates information related to a target ranging mode of the first NAN device; wherein the target ranging mode includes at least one of an EDCA-based enhanced FTM ranging mode or a non-TB ranging mode.

In some embodiments, the setup signaling is configured for setting up the target ranging mode from candidate ranging modes supported by the first NAN device.

In some embodiments, the setup signaling includes an FTM Parameter Indication field and an Enhanced FTM Ranging Indication field, wherein the FTM Parameter Indication field indicates that the target ranging mode used by the first NAN device is any one of the EDCA-based enhanced FTM ranging mode and a traditional FTM ranging mode, and the Enhanced FTM Ranging Indication field explicitly indicates whether the target ranging mode is the EDCA-based enhanced FTM ranging mode.

In some embodiments, in a case that the Enhanced FTM Ranging Indication field takes a first value, the target ranging mode is the EDCA-based enhanced FTM ranging mode; and/or in a case that the Enhanced FTM Ranging Indication field takes a second value, the target ranging mode is the traditional FTM ranging mode.

In some embodiments, the setup signaling includes an FTM Parameter Indication field and an FTM Format Bandwidth field, wherein the FTM Parameter Indication field indicates that the target ranging mode used by the first NAN device is any one of the EDCA-based enhanced FTM ranging mode and a traditional FTM ranging mode, and the FTM Format Bandwidth field implicitly indicates whether the target ranging mode is the EDCA-based enhanced FTM ranging mode.

In some embodiments, in a case that the FTM Format Bandwidth field takes a value within a first field value range, the target ranging mode is the EDCA-based enhanced FTM ranging mode; wherein the first field value range is a field value range corresponding to an HE type format based on the EDCA; and/or in a case that the FTM Format Bandwidth field takes a value within a second field value range, the target ranging mode is the traditional FTM ranging mode.

In some embodiments, the setup signaling includes a Non-TB Parameter Indication field, wherein the Non-TB Parameter Indication field indicates that the target ranging mode used by the first NAN device is the non-TB ranging mode.

In some embodiments, the setup signaling further carries a ranging parameter of the target ranging mode for negotiation.

In some embodiments, the setup signaling includes an FTM Parameter field, wherein the FTM Parameter field carries a ranging parameter of the EDCA-based enhanced FTM ranging mode.

In some embodiments, the setup signaling includes a Non-TB Parameter field, wherein the Non-TB Parameter field carries a ranging parameter of the non-TB ranging mode.

In some embodiments, the setup signaling further indicates whether the first NAN device supports an HE PHY mode.

In some embodiments, the setup signaling is carried in a ranging request frame.

FIG. 30 is a block diagram of an apparatus for setting up a ranging session for a NAN device according to some embodiments of the present disclosure. The apparatus includes a receiving nodule 840.

The receiving module 840 is configured to receive setup signaling for setting up the ranging session, wherein the setup signaling indicates information related to a target ranging mode of a first NAN device, wherein the first NAN device transmits the setup signaling; wherein the target ranging mode includes at least one of an EDCA-based enhanced FTM ranging mode or a non-TB ranging mode.

In some embodiments, the setup signaling is configured for setting up the target ranging mode from candidate ranging modes supported by the first NAN device.

In some embodiments, the setup signaling includes an FTM Parameter Indication field and an Enhanced FTM Ranging Indication field, wherein the FTM Parameter Indication field indicates that the target ranging mode used by the first NAN device is any one of the EDCA-based enhanced FTM ranging mode and a traditional FTM ranging mode, and the Enhanced FTM Ranging Indication field explicitly indicates whether the target ranging mode is the EDCA-based enhanced FTM ranging mode.

In some embodiments, in a case that the Enhanced FTM Ranging Indication field takes a first value, the target ranging mode is the EDCA-based enhanced FTM ranging mode; and/or in a case that the Enhanced FTM Ranging Indication field takes a second value, the target ranging mode is the traditional FTM ranging mode.

In some embodiments, the setup signaling includes an FTM Parameter Indication field and an FTM Format Bandwidth field, wherein the FTM Parameter Indication field indicates that the target ranging mode used by the first NAN device is any one of the EDCA-based enhanced FTM ranging mode and a traditional FTM ranging mode, and the FTM Format Bandwidth field implicitly indicates whether the target ranging mode is the EDCA-based enhanced FTM ranging mode.

In some embodiments, in a case that the FTM Format Bandwidth field takes a value within a first field value range, the target ranging mode is the EDCA-based enhanced FTM ranging mode; wherein the first field value range is a field value range corresponding to an HE type format based on the EDCA; and/or in a case that the FTM Format Bandwidth field takes a value within a second field value range, the target ranging mode is the traditional FTM ranging mode.

In some embodiments, the setup signaling includes a Non-TB Parameter Indication field, wherein the Non-TB Parameter Indication field indicates that the target ranging mode used by the first NAN device is the non-TB ranging mode.

In some embodiments, the setup signaling further carries a ranging parameter of the target ranging mode for negotiation.

In some embodiments, the setup signaling includes an FTM Parameter field, wherein the FTM Parameter field carries a ranging parameter of the EDCA-based enhanced FTM ranging mode.

In some embodiments, the apparatus further includes a transmitting module, configured to transmit response setup signaling for setting up the ranging session, wherein the response setup signaling indicates that the ranging parameter of the target ranging mode received by the second NAN device does not meet a target condition.

In some embodiments, the response setup signaling includes a Reason Code field, wherein the Reason Code field indicates a reason why a parameter of the EDCA-based enhanced FTM ranging mode or the non-TB ranging mode does not meet the target condition.

In some embodiments, in a case that the Reason Code field takes a first value, the Reason Code field indicates that the parameter of the non-TB ranging mode does not meet the target condition; and/or in a case that the Reason Code field takes a second value, the Reason Code field indicates that the parameter of the EDCA-based enhanced FTM ranging mode does not meet a ranging accuracy requirement.

In some embodiments, the response setup signaling is carried in a ranging response frame.

In some embodiments, the setup signaling further carries a ranging parameter of the target ranging mode for negotiation.

In some embodiments, the setup signaling includes an FTM Parameter field, wherein the FTM Parameter field carries a ranging parameter of the EDCA-based enhanced FTM ranging mode.

In some embodiments, the setup signaling includes a Non-TB Parameter field, wherein the Non-TB Parameter field carries a ranging parameter of the non-TB ranging mode.

In some embodiments, the setup signaling further indicates whether the first NAN device supports an HE PHY mode.

In some embodiments, the setup signaling is carried in a ranging request frame.

It should be noted that for the apparatus according to the above embodiments, the division of the functional modules is merely exemplary. In practical application, the above functions may be designated to different functional modules according to actual needs. That is, the internal structure of the device may be divided into different functional modules to implement all or a part of the above functions.

With regard to the apparatus in the above embodiments, the specific manner in which each module performs the operation has been described in detail in the embodiments related to the method and will not be described in detail herein.

FIG. 31 is a schematic structural diagram of a computer device according to some embodiments of the present disclosure. The computer device 1200 includes: a processor 1201, a receiver 1202, a transmitter 1203, a memory 1204, and a bus 1205.

The processor 1201 includes one or more processing cores, and achieves various functional applications and information processing by running software programs and modules.

The receiver 1202 and the transmitter 1203 are practiced as a transceiver. The transceiver is a communication chip.

The memory 1204 is connected to the processor 1201 over the bus 1205. Illustratively, the processor 1201 is practiced as a first integrated circuit (IC) chip, and the processor 1201 and the memory 1204 are practiced as a second IC chip. The first chip and the second chip each is an application specific integrated circuit (ASIC) chip.

The memory 1204 is configured to store one or more computer programs, and the processor 1201, when loading and running the one or more computer programs, is caused to perform various processes in the above method embodiments.

Furthermore, the memory 1204 is practiced as any type or a combination of volatile or nonvolatile storage devices, including, but not limited to: a random-access memory (RAM) and a read-only memory (ROM), an erasable programmable read-only memory (EPROM), an electrically erasable programmable read-only memory (EEPROM), a flash memory or other solid-state memories, a compact disc read-only memory (CD-ROM), a digital video disc (DVD) or other optical storage, a magnetic cassette, a magnetic tape, magnetic disk storage, or other magnetic storage devices.

In some embodiments, the computer device is practices as a NAN device.

Some embodiments of the present disclosure further provide a computer-readable storage medium storing one or more computer programs, wherein the one or more computer programs, when loaded and run by a NAN device, cause the NAN device to perform the method for exchanging the device capability of the NAN device and/or the method for setting up the ranging session for the NAN device as described above.

In some embodiments, the computer-readable storage medium includes: a ROM, a RAM, a solid state drive (SSD), an optical disk, and the like. The RAM includes a resistance random-access memory (ReRAM) and a dynamic random-access memory (DRAM).

Some embodiments of the present disclosure further provide a chip including programmable logic circuity or one or more program instructions, wherein the chip, when running, causes a NAN device equipped with the chip to perform the method for exchanging the device capability of the NAN device and/or the method for setting up the ranging session for the NAN device as described above.

Some embodiments of the present disclosure further provide a computer program product or a computer program. The computer program product or the computer program includes one or more computer instructions stored in a computer-readable storage medium, wherein the one or more computer instructions, when read and executed by a NAN device from the computer-readable storage medium, cause the NAN device to perform the method for exchanging the device capability of the NAN device and/or the method for setting up the ranging session for the NAN device as described above.

It should be understood that the term "indication" mentioned in the embodiments of the present disclosure is a direct indication, an indirect indication, or an indication that there is an association relationship. For example, A indicates B, which may mean that A indicates B directly, e.g., B may be acquired by A; or that A indicates B indirectly, e.g., A indicates C by which B may be acquired; or that an association relationship is present between A and B.

In the description of the embodiments of the present disclosure, the term "correspond" indicates a direct or indirect corresponding relationship between two items, or indicates an associated relationship between the two items. It may also indicate relationships such as indicating and being indicated, or configuring and being configured.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects. In addition, serial numbers of the processes described herein only show an exemplary possible sequence of performing the processes. In some other embodiments, the processes may also be performed out of the numbering sequence, for example, two processes with different serial numbers are performed concurrently, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

Described above are merely exemplary embodiments of the present disclosure and are not intended to limit the present disclosure. Any modifications, equivalent substitutions, improvements, and the like, made within the spirit and principle of the present disclosure should fall within the protection scope of the present disclosure.

## Claims

1. A method for exchanging a device capability of a neighbor awareness networking (NAN) device, applicable to a first NAN device, the method comprising:
transmitting capability signaling for exchanging the device capability, wherein the capability signaling indicates whether the first NAN device supports a related capability of a target ranging mode, wherein the target ranging mode comprises at least one of an enhanced distributed channel access (EDCA)-based enhanced fine timing measurement (FTM) ranging mode or a non-trigger-based (non-TB) ranging mode.

2. The method according to claim 1, wherein the capability signaling indicates whether the first NAN device supports the target ranging mode.

3. The method according to claim 2, wherein the capability signaling comprises a Ranging Protocol Indication field, wherein the Ranging Protocol Indication field indicates whether the first NAN device supports the target ranging mode.

4. The method according to claim 3, wherein the Ranging Protocol Indication field comprises first indication information and second indication information, wherein the first indication information indicates whether the first NAN device supports the EDCA-based enhanced FTM ranging mode, and/or the second indication information indicates whether the first NAN device supports the non-TB ranging mode.

5. The method according to claim 4, wherein the Ranging Protocol Indication field further comprises third indication information, wherein the third indication information indicates whether the first NAN device supports a traditional FTM ranging mode.

6. The method according to any one of claims 2 to 5, wherein the capability signaling is carried in a NAN beacon frame or a NAN service discovery frame.

7. The method according to claim 1, wherein the capability signaling indicates a target ranging mode used by a service of the first NAN device.

8. The method according to claim 7, wherein the capability signaling comprises a Ranging with Specific Type information; wherein
in a case that the Ranging with Specific Type information takes a first value, the capability signaling indicates that the target ranging mode used by the service of the first NAN device is the EDCA-based enhanced FTM ranging mode; and/or
in a case that the Ranging with Specific Type information takes a second value, the capability signaling indicates that the target ranging mode used by the service of the first NAN device is the non-TB ranging mode.

9. The method according to claim 8, wherein in a case that the Ranging with Specific Type information takes a third value, the capability signaling indicates that the target ranging mode used by the service of the first NAN device is a traditional FTM ranging mode.

10. The method according to any one of claims 7 to 9, wherein the capability signaling is carried in a NAN service discovery frame.

11. The method according to any one of claims 1 to 6, wherein the capability signaling further indicates whether the first NAN device supports a high efficiency (HE) physical layer (PHY) mode.

12. The method according to claim 11, wherein the capability signaling comprises an Extended PHY Mode information; wherein
in a case that the Extended PHY Mode information takes a first value, the capability signaling indicates that the first NAN device supports the HE PHY mode; and/or
in a case that the Extended PHY Mode information takes a second value, the capability signaling indicates that the first NAN device does not support the HE PHY mode.

13. The method according to claim 12, wherein the capability signaling further indicates support of a channel bandwidth mode of the first NAN device.

14. The method according to claim 13, wherein the capability signaling further comprises at least one of first bandwidth indication information or second bandwidth indication information; wherein
in a case that the Extended PHY Mode information takes the first value, and the first bandwidth indication information takes a third value, the capability signaling indicates that the first NAN device supports the HE PHY mode and a first bandwidth; and/or
in a case that the Extended PHY Mode information takes the first value, and the first bandwidth indication information takes a fourth value, the capability signaling indicates that the first NAN device supports the HE PHY mode but does not support a first bandwidth; and/or
in a case that the Extended PHY Mode information takes the first value, and the second bandwidth indication information takes a fifth value, the capability signaling indicates that the first NAN device supports the HE PHY mode and a second bandwidth; and/or
in a case that the Extended PHY Mode information takes the first value, and the second bandwidth indication information takes a sixth value, the capability signaling indicates that the first NAN device supports the HE PHY mode but does not support a second bandwidth.

15. The method according to claim 14, wherein the extended PHY mode information is carried in an Operation Mode field in the capability signaling, wherein the Operation Mode field further carries at least one of the first bandwidth indication information or the second bandwidth indication information.

16. The method according to any one of claims 11 to 15, wherein the capability signaling is carried in a NAN beacon frame or a NAN service discovery frame.

17. The method according to claim 1, further comprising:
transmitting or receiving setup signaling for setting up a ranging session, wherein the setup signaling indicates information related to the target ranging mode of the NAN device transmitting the setup signaling, wherein the target ranging mode comprises at least one of the EDCA-based enhanced FTM ranging mode or the non-TB ranging mode.

18. The method according to claim 17, wherein the setup signaling is configured for setting up the target ranging mode from candidate ranging modes supported by the first NAN device.

19. The method according to claim 18, wherein the setup signaling comprises an FTM Parameter Indication field and an Enhanced FTM Ranging Indication field, wherein the FTM Parameter Indication field indicates that the target ranging mode used by the first NAN device is any one of the EDCA-based enhanced FTM ranging mode and a traditional FTM ranging mode, and the Enhanced FTM Ranging Indication field explicitly indicates whether the target ranging mode is the EDCA-based enhanced FTM ranging mode.

20. The method according to claim 19, wherein
in a case that the Enhanced FTM Ranging Indication field takes a first value, the target ranging mode is the EDCA-based enhanced FTM ranging mode; and/or
in a case that the Enhanced FTM Ranging Indication field takes a second value, the target ranging mode is the traditional FTM ranging mode.

21. The method according to claim 18, wherein the setup signaling comprises an FTM Parameter Indication field and an FTM Format Bandwidth field, wherein the FTM Parameter Indication field indicates that the target ranging mode used by the first NAN device is any one of the EDCA-based enhanced FTM ranging mode and a traditional FTM ranging mode, and the FTM Format Bandwidth field implicitly indicates whether the target ranging mode is the EDCA-based enhanced FTM ranging mode.

22. The method according to claim 21, wherein
in a case that the FTM Format Bandwidth field takes a value within a first field value range, the target ranging mode is the EDCA-based enhanced FTM ranging mode, wherein the first field value range is a field value range corresponding to an HE type format based on the EDCA; and/or
in a case that the FTM Format Bandwidth field takes a value within a second field value range, the target ranging mode is the traditional FTM ranging mode.

23. The method according to claim 18, wherein the setup signaling comprises a Non-TB Parameter Indication field, wherein the Non-TB Parameter Indication field indicates that the target ranging mode used by the first NAN device is the non-TB ranging mode.

24. The method according to claim 18, wherein the setup signaling further carries a ranging parameter of the target ranging mode for negotiation.

25. The method according to claim 24, wherein the setup signaling comprises an FTM Parameter field, wherein the FTM Parameter field carries a ranging parameter of the EDCA-based enhanced FTM ranging mode.

26. The method according to claim 24, wherein the setup signaling comprises a Non-TB Parameter field, wherein the Non-TB Parameter field carries a ranging parameter of the non-TB ranging mode.

27. The method according to claim 24, wherein
transmitting or receiving the setup signaling for setting up the ranging session comprises:
receiving the setup signaling for setting up the ranging session; and
the method further comprises:
transmitting response setup signaling for setting up the ranging session, wherein the response setup signaling indicates that the ranging parameter of the target ranging mode received by the first NAN device does not meet a target condition.

28. The method according to claim 27, wherein the response setup signaling comprises a Reason Code field, wherein the Reason Code field indicates a reason why a parameter of the EDCA-based enhanced FTM ranging mode or the non-TB ranging mode does not meet the target condition.

29. The method according to claim 28, wherein
in a case that the Reason Code field takes a first value, the Reason Code field indicates that the parameter of the non-TB ranging mode does not meet the target condition; and/or
in a case that the Reason Code field takes a second value, the Reason Code field indicates that the parameter of the EDCA-based enhanced FTM ranging mode does not meet a ranging accuracy requirement.

30. The method according to any one of claims 27 to 29, wherein the response setup signaling is carried in a ranging response frame.

31. The method according to claim 17, wherein the setup signaling further indicates whether the first NAN device supports a high efficiency (HE) physical layer (PHY) mode.

32. The method according to any one of claims 17 to 29, wherein the setup signaling is carried in a ranging request frame.

33. A method for exchanging a device capability of a neighbor awareness networking (NAN) device, applicable to a second NAN device, the method comprising:
receiving capability signaling for exchanging the device capability, wherein the capability signaling indicates whether a first NAN device supports a related capability of a target ranging mode, wherein the first NAN device transmits the capability signaling, and the target ranging mode comprises at least one of an enhanced distributed channel access (EDCA)-based enhanced fine timing measurement (FTM) ranging mode or a non-trigger-based (non-TB) ranging mode.

34. The method according to claim 33, wherein the capability signaling indicates whether the first NAN device supports the target ranging mode.

35. The method according to claim 34, wherein the capability signaling comprises a Ranging Protocol Indication field, wherein the Ranging Protocol Indication field indicates whether the first NAN device supports the target ranging mode.

36. The method according to claim 35, wherein the Ranging Protocol Indication field comprises first indication information and second indication information, wherein the first indication information indicates whether the first NAN device supports the EDCA-based enhanced FTM ranging mode, and/or the second indication information indicates whether the first NAN device supports the non-TB ranging mode.

37. The method according to claim 36, wherein the Ranging Protocol Indication field further comprises third indication information, wherein the third indication information indicates whether the first NAN device supports a traditional FTM ranging mode.

38. The method according to any one of claims 34 to 37, wherein the capability signaling is carried in a NAN beacon frame or a NAN service discovery frame.

39. The method according to claim 33, wherein the capability signaling indicates a target ranging mode used by a service of the first NAN device.

40. The method according to claim 39, wherein the capability signaling comprises Ranging with Specific Type information, wherein
in a case that the Ranging with Specific Type information takes a first value, the capability signaling indicates that the target ranging mode used by the service of the first NAN device is the EDCA-based enhanced FTM ranging mode; and/or
in a case that the Ranging with Specific Type information takes a second value, the capability signaling indicates that the target ranging mode used by the service of the first NAN device is the non-TB ranging mode.

41. The method according to claim 40, wherein in a case that the Ranging with Specific Type information takes a third value, the capability signaling indicates that the target ranging mode used by the service of the first NAN device is a traditional FTM ranging mode.

42. The method according to any one of claims 39 to 41, wherein the capability signaling is carried in a NAN service discovery frame.

43. The method according to claim 33, wherein the capability signaling indicates whether the first NAN device supports a high efficiency (HE) physical layer (PHY) mode.

44. The method according to claim 43, wherein the capability signaling comprises Extended PHY Mode information, wherein
in a case that the Extended PHY Mode information takes a first value, the capability signaling indicates that the first NAN device supports the HE PHY mode; and/or
in a case that the Extended PHY Mode information takes a second value, the capability signaling indicates that the first NAN device does not support the HE PHY mode.

45. The method according to claim 44, wherein the capability signaling further indicates support of a channel bandwidth mode of the first NAN device.

46. The method according to claim 45, wherein the capability signaling further comprises at least one of first bandwidth indication information or second bandwidth indication information, wherein
in a case that the Extended PHY Mode information takes the first value, and the first bandwidth indication information takes a third value, the capability signaling indicates that the first NAN device supports the HE PHY mode and a first bandwidth; and/or
in a case that the Extended PHY Mode information takes the first value, and the first bandwidth indication information takes a fourth value, the capability signaling indicates that the first NAN device supports the HE PHY mode but does not support a first bandwidth; and/or
in a case that the Extended PHY Mode information takes the first value, and the second bandwidth indication information takes a fifth value, the capability signaling indicates that the first NAN device supports the HE PHY mode and a second bandwidth; and/or
in a case that the Extended PHY Mode information takes the first value, and the second bandwidth indication information takes a sixth value, the capability signaling indicates that the first NAN device supports the HE PHY mode but does not support a second bandwidth.

47. The method according to claim 46, wherein the Extended PHY Mode information is carried in an Operation Mode field in the capability signaling, wherein the Operation Mode field further carries at least one of the first bandwidth indication information or the second bandwidth indication information.

48. The method according to any one of claims 43 to 47, wherein the capability signaling is carried in a NAN beacon frame or a NAN service discovery frame.

49. The method according to claim 33, further comprising:
transmitting or receiving setup signaling for setting up a ranging session, wherein the setup signaling indicates information related to the target ranging mode of the NAN device transmitting the setup signaling, wherein the target ranging mode comprises at least one of the EDCA-based enhanced FTM ranging mode or the non-TB ranging mode.

50. The method according to claim 49, wherein the setup signaling is configured for setting up the target ranging mode from candidate ranging modes supported by the first NAN device.

51. The method according to claim 50, wherein the setup signaling comprises an FTM Parameter Indication field and an Enhanced FTM Ranging Indication field, wherein the FTM Parameter Indication field indicates that the target ranging mode used by the first NAN device is any one of the EDCA-based enhanced FTM ranging mode and a traditional FTM ranging mode, and the Enhanced FTM Ranging Indication field explicitly indicates whether the target ranging mode is the EDCA-based enhanced FTM ranging mode.

52. The method according to claim 51, wherein
in a case that the Enhanced FTM Ranging Indication field takes a first value, the target ranging mode is the EDCA-based enhanced FTM ranging mode; and/or
in a case that the Enhanced FTM Ranging Indication field takes a second value, the target ranging mode is the traditional FTM ranging mode.

53. The method according to claim 50, wherein the setup signaling comprises an FTM Parameter Indication field and an FTM Format Bandwidth field, wherein the FTM Parameter Indication field indicates that the target ranging mode used by the first NAN device is any one of the EDCA-based enhanced FTM ranging mode and a traditional FTM ranging mode, and the FTM Format Bandwidth field implicitly indicates whether the target ranging mode is the EDCA-based enhanced FTM ranging mode.

54. The method according to claim 53, wherein
in a case that the FTM Format Bandwidth field takes a value within a first field value range, the target ranging mode is the EDCA-based enhanced FTM ranging mode, wherein the first field value range is a field value range corresponding to an HE type format based on the EDCA; and/or
in a case that the FTM Format Bandwidth field takes a value within a second field value range, the target ranging mode is the traditional FTM ranging mode.

55. The method according to claim 50, wherein the setup signaling comprises a Non-TB Parameter Indication field, wherein the Non-TB Parameter Indication field indicates that the target ranging mode used by the first NAN device is the non-TB ranging mode.

56. The method according to claim 50, wherein the setup signaling further carries a ranging parameter of the target ranging mode for negotiation.

57. The method according to claim 56, wherein the setup signaling comprises an FTM Parameter field, wherein the FTM Parameter field carries a ranging parameter of the EDCA-based enhanced FTM ranging mode.

58. The method according to claim 56, wherein the setup signaling comprises a Non-TB Parameter field, wherein the Non-TB Parameter field carries a ranging parameter of the non-TB ranging mode.

59. The method according to claim 56, wherein
transmitting or receiving the setup signaling for setting up the ranging session comprises:
receiving the setup signaling for setting up the ranging session; and
the method further comprises:
transmitting response setup signaling for setting up the ranging session, wherein the response setup signaling indicates that the ranging parameter of the target ranging mode received by the first NAN device does not meet a target condition.

60. The method according to claim 59, wherein the response setup signaling comprises a Reason Code field, wherein the Reason Code field indicates a reason why a parameter of the EDCA-based enhanced FTM ranging mode or the non-TB ranging mode does not meet the target condition.

61. The method according to claim 60, wherein
in a case that the Reason Code field takes a first value, the Reason Code field indicates that the parameter of the non-TB ranging mode does not meet the target condition; and/or
in a case that the Reason Code field takes a second value, the Reason Code field indicates that the parameter of the EDCA-based enhanced FTM ranging mode does not meet a ranging accuracy requirement.

62. The method according to any one of claims 59 to 61, wherein the response setup signaling is carried in a ranging response frame.

63. The method according to claim 49, wherein the setup signaling further indicates whether the first NAN device supports a high efficiency (HE) physical layer (PHY) mode.

64. The method according to any one of claims 49 to 61, wherein the setup signaling is carried in a ranging request frame.

65. A method for setting up a ranging session for a neighbor awareness networking (NAN) device, applicable to a first NAN device, the method comprising:
transmitting setup signaling for setting up the ranging session, wherein the setup signaling indicates information related to a target ranging mode of the first NAN device, wherein the target ranging mode comprises at least one of an enhanced distributed channel access (EDCA)-based enhanced fine timing measurement (FTM) ranging mode or a non-trigger-based (non-TB) ranging mode.

66. The method according to claim 65, wherein the setup signaling is configured for setting up the target ranging mode from candidate ranging modes supported by the first NAN device.

67. The method according to claim 66, wherein the setup signaling comprises an FTM Parameter Indication field and an Enhanced FTM Ranging Indication field, wherein the FTM Parameter Indication field indicates that the target ranging mode used by the first NAN device is any one of the EDCA-based enhanced FTM ranging mode and a traditional FTM ranging mode, and the Enhanced FTM Ranging Indication field explicitly indicates whether the target ranging mode is the EDCA-based enhanced FTM ranging mode.

68. The method according to claim 67, wherein
in a case that the Enhanced FTM Ranging Indication field takes a first value, the target ranging mode is the EDCA-based enhanced FTM ranging mode; and/or
in a case that the Enhanced FTM Ranging Indication field takes a second value, the target ranging mode is the traditional FTM ranging mode.

69. The method according to claim 66, wherein the setup signaling comprises an FTM Parameter Indication field and an FTM Format Bandwidth field, wherein the FTM Parameter Indication field indicates that the target ranging mode used by the first NAN device is any one of the EDCA-based enhanced FTM ranging mode and a traditional FTM ranging mode, and the FTM Format Bandwidth field implicitly indicates whether the target ranging mode is the EDCA-based enhanced FTM ranging mode.

70. The method according to claim 69, wherein
in a case that the FTM Format Bandwidth field takes a value within a first field value range, the target ranging mode is the EDCA-based enhanced FTM ranging mode, wherein the first field value range is a field value range corresponding to an HE type format based on the EDCA; and/or
in a case that the FTM Format Bandwidth field takes a value within a second field value range, the target ranging mode is the traditional FTM ranging mode.

71. The method according to claim 66, wherein the setup signaling comprises a Non-TB Parameter Indication field, wherein the Non-TB Parameter Indication field indicates that the target ranging mode used by the first NAN device is the non-TB ranging mode.

72. The method according to claim 66, wherein the setup signaling further carries a ranging parameter of the target ranging mode for negotiation.

73. The method according to claim 72, wherein the setup signaling comprises an FTM Parameter field, wherein the FTM Parameter field carries a ranging parameter of the EDCA-based enhanced FTM ranging mode.

74. The method according to claim 72, wherein the setup signaling comprises a Non-TB Parameter field, wherein the Non-TB Parameter field carries a ranging parameter of the non-TB ranging mode.

75. The method according to claim 65, wherein the setup signaling further indicates whether the first NAN device supports a high efficiency (HE) physical layer (PHY) mode.

76. The method according to any one of claims 65 to 75, wherein the setup signaling is carried in a ranging request frame.

77. The method according to claim 65, further comprising:
transmitting or receiving capability signaling for exchanging a device capability, wherein the capability signaling indicates whether a NAN device transmitting the capability signaling supports a related capability of the target ranging mode, wherein the target ranging mode comprises at least one of the EDCA-based enhanced FTM ranging mode or the non-TB ranging mode.

78. The method according to claim 77, wherein the capability signaling indicates whether the first NAN device supports the target ranging mode.

79. The method according to claim 78, wherein the capability signaling comprises a Ranging Protocol Indication field, wherein the Ranging Protocol Indication field indicates whether the first NAN device supports the target ranging mode.

80. The method according to claim 79, wherein the Ranging Protocol Indication field comprises first indication information and second indication information, wherein the first indication information indicates whether the first NAN device supports the EDCA-based enhanced FTM ranging mode, and/or the second indication information indicates whether the first NAN device supports the non-TB ranging mode.

81. The method according to claim 80, wherein the Ranging Protocol Indication field further comprises third indication information, wherein the third indication information indicates whether the first NAN device supports a traditional FTM ranging mode.

82. The method according to any one of claims 78 to 81, wherein the capability signaling is carried in a NAN beacon frame or a NAN service discovery frame.

83. The method according to claim 77, wherein the capability signaling indicates a target ranging mode used by a service of the first NAN device.

84. The method according to claim 83, wherein the capability signaling comprises Ranging with Specific Type information, wherein
in a case that the Ranging with Specific Type information takes a first value, the capability signaling indicates that the target ranging mode used by the service of the first NAN device is the EDCA-based enhanced FTM ranging mode; and/or
in a case that the Ranging with Specific Type information takes a second value, the capability signaling indicates that the target ranging mode used by the service of the first NAN device is the non-TB ranging mode.

85. The method according to claim 84, wherein in a case that the Ranging with Specific Type information takes a third value, the capability signaling indicates that the target ranging mode used by the service of the first NAN device is a traditional FTM ranging mode.

86. The method according to any one of claims 83 to 85, wherein the capability signaling is carried in a NAN service discovery frame.

87. The method according to any one of claims 77 to 82, wherein the capability signaling further indicates whether the first NAN device supports a high efficiency (HE) physical layer (PHY) mode.

88. The method according to claim 87, wherein the capability signaling comprises Extended PHY Mode information, wherein
in a case that the Extended PHY Mode information takes a first value, the capability signaling indicates that the first NAN device supports the HE PHY mode; and/or
in a case that the Extended PHY Mode information takes a second value, the capability signaling indicates that the first NAN device does not support the HE PHY mode.

89. The method according to claim 88, wherein the capability signaling further indicates support of a channel bandwidth mode of the first NAN device.

90. The method according to claim 89, wherein the capability signaling further comprises at least one of first bandwidth indication information or second bandwidth indication information, wherein
in a case that the Extended PHY Mode information takes the first value, and the first bandwidth indication information takes a third value, the capability signaling indicates that the first NAN device supports the HE PHY mode and a first bandwidth; and/or
in a case that the Extended PHY Mode information takes the first value, and the first bandwidth indication information takes a fourth value, the capability signaling indicates that the first NAN device supports the HE PHY mode but does not support a first bandwidth; and/or
in a case that the Extended PHY Mode information takes the first value, and the second bandwidth indication information takes a fifth value, the capability signaling indicates that the first NAN device supports the HE PHY mode and a second bandwidth; and/or
in a case that the Extended PHY Mode information takes the first value, and the second bandwidth indication information takes a sixth value, the capability signaling indicates that the first NAN device supports the HE PHY mode but does not support a second bandwidth.

91. The method according to claim 90, wherein the Extended PHY Mode information is carried in an Operation Mode field in the capability signaling, wherein the Operation Mode field further carries at least one of the first bandwidth indication information or the second bandwidth indication information.

92. The method according to any one of claims 87 to 91, wherein the capability signaling is carried in a NAN beacon frame or a NAN service discovery frame.

93. A method for setting up a ranging session for a neighbor awareness networking (NAN) device, applicable to a second NAN device, the method comprising:
receiving setup signaling for setting up the ranging session, wherein the setup signaling indicates information related to a target ranging mode of a first NAN device, wherein the first NAN device transmits the setup signaling, and the target ranging mode comprises at least one of an enhanced distributed channel access (EDCA)-based enhanced fine timing measurement (FTM) ranging mode or a non-trigger-based (non-TB) ranging mode.

94. The method according to claim 93, wherein the setup signaling is configured for setting up the target ranging mode from candidate ranging modes supported by the first NAN device.

95. The method according to claim 94, wherein the setup signaling comprises an FTM Parameter Indication field and an Enhanced FTM Ranging Indication field, wherein the FTM Parameter Indication field indicates that the target ranging mode used by the first NAN device is any one of the EDCA-based enhanced FTM ranging mode and a traditional FTM ranging mode, and the Enhanced FTM Ranging Indication field explicitly indicates whether the target ranging mode is the EDCA-based enhanced FTM ranging mode.

96. The method according to claim 95, wherein
in a case that the Enhanced FTM Ranging Indication field takes a first value, the target ranging mode is the EDCA-based enhanced FTM ranging mode; and/or
in a case that the Enhanced FTM Ranging Indication field takes a second value, the target ranging mode is the traditional FTM ranging mode.

97. The method according to claim 94, wherein the setup signaling comprises an FTM Parameter Indication field and an FTM Format Bandwidth field, wherein the FTM Parameter Indication field indicates that the target ranging mode used by the first NAN device is any one of the EDCA-based enhanced FTM ranging mode and a traditional FTM ranging mode, and the FTM Format Bandwidth field implicitly indicates whether the target ranging mode is the EDCA-based enhanced FTM ranging mode.

98. The method according to claim 97, wherein
in a case that the FTM Format Bandwidth field takes a value within a first field value range, the target ranging mode is the EDCA-based enhanced FTM ranging mode, wherein the first field value range is a field value range corresponding to an HE type format based on the EDCA; and/or
in a case that the FTM Format Bandwidth field takes a value within a second field value range, the target ranging mode is the traditional FTM ranging mode.

99. The method according to claim 94, wherein the setup signaling comprises a Non-TB Parameter Indication field, wherein the Non-TB Parameter Indication field indicates that the target ranging mode used by the first NAN device is the non-TB ranging mode.

100. The method according to claim 94, wherein the setup signaling further carries a ranging parameter of the target ranging mode for negotiation.

101. The method according to claim 100, wherein the setup signaling comprises an FTM Parameter field, wherein the FTM Parameter field carries a ranging parameter of the EDCA-based enhanced FTM ranging mode.

102. The method according to claim 100, wherein the setup signaling comprises a Non-TB Parameter field, wherein the Non-TB Parameter field carries a ranging parameter of the non-TB ranging mode.

103. The method according to claim 100, further comprising:
transmitting response setup signaling for setting up the ranging session, wherein the response setup signaling indicates that the ranging parameter of the target ranging mode received by the second NAN device does not meet a target condition.

104. The method according to claim 103, wherein the response setup signaling comprises a Reason Code field, wherein the Reason Code field indicates a reason why a parameter of the EDCA-based enhanced FTM ranging mode or the non-TB ranging mode does not meet the target condition.

105. The method according to claim 104, wherein
in a case that the Reason Code field takes a first value, the Reason Code field indicates that the parameter of the non-TB ranging mode does not meet the target condition; and/or
in a case that the Reason Code field takes a second value, the Reason Code field indicates that the parameter of the EDCA-based enhanced FTM ranging mode does not meet a ranging accuracy requirement.

106. The method according to any one of claims 103 to 105, wherein the response setup signaling is carried in a ranging response frame.

107. The method according to claim 93, wherein the setup signaling further indicates whether the first NAN device supports a high efficiency (HE) physical layer (PHY) mode.

108. The method according to any one of claims 93 to 105, wherein the setup signaling is carried in a ranging request frame.

109. The method according to claim 93, further comprising:
transmitting or receiving capability signaling for exchanging a device capability, wherein the capability signaling indicates whether a NAN device transmitting the capability signaling supports a related capability of the target ranging mode, wherein the target ranging mode comprises at least one of the EDCA-based enhanced FTM ranging mode or the non-TB ranging mode.

110. The method according to claim 109, wherein the capability signaling indicates whether the first NAN device supports the target ranging mode.

111. The method according to claim 110, wherein the capability signaling comprises a Ranging Protocol Indication field, wherein the Ranging Protocol Indication field indicates whether the first NAN device supports the target ranging mode.

112. The method according to claim 111, wherein the Ranging Protocol Indication field comprises first indication information and second indication information, wherein the first indication information indicates whether the first NAN device supports the EDCA-based enhanced FTM ranging mode, and/or the second indication information indicates whether the first NAN device supports the non-TB ranging mode.

113. The method according to claim 112, wherein the Ranging Protocol Indication field further comprises third indication information, wherein the third indication information indicates whether the first NAN device supports a traditional FTM ranging mode.

114. The method according to any one of claims 110 to 113, wherein the capability signaling is carried in a NAN beacon frame or a NAN service discovery frame.

115. The method according to claim 109, wherein the capability signaling indicates a target ranging mode used by a service of the first NAN device.

116. The method according to claim 115, wherein the capability signaling comprises Ranging with Specific Type information; wherein
in a case that the Ranging with Specific Type information takes a first value, the capability signaling indicates that the target ranging mode used by the service of the first NAN device is the EDCA-based enhanced FTM ranging mode; and/or
in a case that the Ranging with Specific Type information takes a second value, the capability signaling indicates that the target ranging mode used by the service of the first NAN device is the non-TB ranging mode.

117. The method according to claim 116, wherein in a case that the Ranging with Specific Type information takes a third value, the capability signaling indicates that the target ranging mode used by the service of the first NAN device is a traditional FTM ranging mode.

118. The method according to any one of claims 115 to 117, wherein the capability signaling is carried in a NAN service discovery frame.

119. The method according to any one of claims 109 to 114, wherein the capability signaling further indicates whether the first NAN device supports a high efficiency (HE) physical layer (PHY) mode.

120. The method according to claim 119, wherein the capability signaling comprises Extended PHY Mode information; wherein
in a case that the Extended PHY Mode information takes a first value, the capability signaling indicates that the first NAN device supports the HE PHY mode; and/or
in a case that Extended PHY Mode information takes a second value, the capability signaling indicates that the first NAN device does not support the HE PHY mode.

121. The method according to claim 120, wherein the capability signaling further indicates support of a channel bandwidth mode of the first NAN device.

122. The method according to claim 121, wherein the capability signaling further comprises at least one of first bandwidth indication information or second bandwidth indication information, wherein
in a case that the Extended PHY Mode information takes the first value, and the first bandwidth indication information takes a third value, the capability signaling indicates that the first NAN device supports the HE PHY mode and a first bandwidth; and/or
in a case that the Extended PHY Mode information takes the first value, and the first bandwidth indication information takes a fourth value, the capability signaling indicates that the first NAN device supports the HE PHY mode but does not support a first bandwidth; and/or
in a case that the Extended PHY Mode information takes the first value, and the second bandwidth indication information takes a fifth value, the capability signaling indicates that the first NAN device supports the HE PHY mode and a second bandwidth; and/or
in a case that the Extended PHY Mode information takes the first value, and the second bandwidth indication information takes a sixth value, the capability signaling indicates that the first NAN device supports the HE PHY mode but does not support a second bandwidth.

123. The method according to claim 122, wherein the Extended PHY Mode information is carried in an Operation Mode field in the capability signaling, wherein the Operation Mode field further carries at least one of the first bandwidth indication information or the second bandwidth indication information.

124. The method according to any one of claims 119 to 123, wherein the capability signaling is carried in a NAN beacon frame or a NAN service discovery frame.

125. An apparatus for exchanging a device capability of a neighbor awareness networking (NAN) device, comprising:
a transmitting module, configured to transmit capability signaling for exchanging the device capability, wherein the capability signaling indicates whether a first NAN device supports a related capability of a target ranging mode, wherein the target ranging mode comprises at least one of an enhanced distributed channel access (EDCA)-based enhanced fine timing measurement (FTM) ranging mode or a non-trigger-based (non-TB) ranging mode.

126. An apparatus for exchanging a device capability of a neighbor awareness networking (NAN) device, comprising:
a receiving module, configured to receive capability signaling for exchanging the device capability, wherein the capability signaling indicates whether a first NAN device supports a related capability of a target ranging mode, wherein the first NAN device transmits the capability signaling, and the target ranging mode comprises at least one of an enhanced distributed channel access (EDCA)-based enhanced fine timing measurement (FTM) ranging mode or a non-trigger-based (non-TB) ranging mode.

127. An apparatus for setting up a ranging session for a neighbor awareness networking (NAN) device, comprising:
a transmitting module, configured to transmit setup signaling for setting up the ranging session, wherein the setup signaling indicates information related to a target ranging mode of a first NAN device, wherein the target ranging mode comprises at least one of an enhanced distributed channel access (EDCA)-based enhanced fine timing measurement (FTM) ranging mode or a non-trigger-based (non-TB) ranging mode.

128. An apparatus for setting up a ranging session for a neighbor awareness networking (NAN) device, comprising:
a receiving module, configured to receive setup signaling for setting up the ranging session, wherein the setup signaling indicates information related to a target ranging mode of a first NAN device, wherein the first NAN device transmits the setup signaling, and the target ranging mode comprises at least one of an enhanced distributed channel access (EDCA)-based enhanced fine timing measurement (FTM) ranging mode or a non-trigger-based (non-TB) ranging mode.

129. A neighbor awareness networking (NAN) device, comprising: a processor and a memory storing one or more programs, wherein the processor, when loading and running the one or more programs, causes the NAN device to perform the method for exchanging the device capability of the NAN device as defined in any one of claims 1 to 64 and/or the method for setting up the ranging session of the NAN device as defined in any one of claims 65 to 124.

130. A computer-readable storage medium, storing one or more computer programs, wherein the one or more computer programs, when loaded and run by a NAN device, cause the NAN device to perform the method for exchanging the device capability of the NAN device as defined in any one of claims 1 to 64 and/or the method for setting up the ranging session of the NAN device as defined in any one of claims 65 to 124.

131. A chip, comprising: programmable logic circuity or one or more program instructions, wherein the chip, when running, causes a NAN device equipped with the chip to perform the method for exchanging the device capability of the NAN device as defined in any one of claims 1 to 64 and/or the method for setting up the ranging session of the NAN device as defined in any one of claims 65 to 124.

132. A computer program product, comprising: one or more computer instructions stored in a computer-readable storage medium, wherein the one or more computer instructions, when read and executed by a NAN device, cause the NAN device to perform the method for exchanging the device capability of the NAN device as defined in any one of claims 1 to 64 and/or the method for setting up the ranging session of the NAN device as defined in any one of claims 65 to 124.
